(19) Europäisches Patentamt
European Patent Office
Office européen des brevets

(11) EP 0 719 289 B1

(12) EUROPEAN PATENT SPECIFICATION

(45) Date of publication and mention of the grant of the patent: **29.12.1999 Bulletin 1999/52**

(21) Application number: **94928630.6**

(22) Date of filing: **16.09.1994**

(51) Int Cl.[6]: **C08F 10/02**, C08F 4/643, C08F 2/34

(86) International application number: **PCT/US94/10621**

(87) International publication number: **WO 95/07942 (23.03.1995 Gazette 1995/13)**

# (54) GAS PHASE POLYMERIZATION OF OLEFINS

OLEFINPOLYMERISATION IN DER GASPHASE

POLYMERISATION EN PHASE GAZEUSE D'OLEFINES

(84) Designated Contracting States:
**AT BE CH DE DK ES FR GB GR IE IT LI LU MC NL PT SE**

(30) Priority: **17.09.1993 US 122852**

(43) Date of publication of application: **03.07.1996 Bulletin 1996/27**

(73) Proprietor: **THE DOW CHEMICAL COMPANY**
**Midland, Michigan 48674 (US)**

(72) Inventors:
- **SWINDOLL, Robert, D.**
  **Richwood, TX 77531 (US)**
- **STORY, Bruce A.**
  **Lake Jackson, TX 77566 (US)**
- **KOLTHAMMER, Brian, W., S.**
  **Lake Jackson, TX 77566 (US)**
- **PEIL, Kevin, P.**
  **Auburn, MI 48611 (US)**
- **WILSON, David, R.**
  **Midland, MI 48640 (US)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**WO-A-93/08221**
**WO-A-94/03506**
**WO-A-94/03509**
**WO-A-94/07928**

EP 0 719 289 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to a gas phase fluidized bed process for producing olefin polymers, particularly ethylene polymers, having improved processability. These polymers include olefin polymers having low susceptibility to melt fracture, even under high shear stress conditions.

The discovery of the fluidized bed process for the production of linear olefin polymers provided a means for producing these diverse and widely used polymers with a drastic reduction in capital investment and a dramatic reduction in energy requirements as compared to then conventional processes.

To be commercially useful in a gas phase process, such as the fluid bed processes of U.S. Pat. Nos. 3,709,853; 4,003,712 and 4,011,382; Canadian Pat. No. 991,798 and Belgian Pat. No. 839,380, the catalyst employed must be a highly active catalyst. Typically, levels of productivity reach from 50,000 to 1,000,000 kg (pounds) of polymer or more per kg (pound) of primary metal in the catalyst. High productivity in the gas phase processes is desired to avoid the expense of catalyst residue removal procedures. Thus, the catalyst residue in the polymer must be small enough that it can be left in the polymer without causing any undue problems to either the resin manufacturer, or to a party fabricating articles from the resin, or to an ultimate user of such fabricated articles. Where a high activity catalyst is successfully used in such fluid bed processes, the transition metal content of the resin is on the order of ≤20 parts per million (ppm) of primary metal at a productivity level of ≥ 50,000 kg (pounds) of polymer per kg (pound) of metal. Low catalyst residue contents are also important in heterogeneous catalysts comprising chlorine containing materials such as the titanium, magnesium and/or aluminum chloride complexes used in some so-called Ziegler or Ziegler-Natta type catalysts. Use of these heterogeneous catalysts results in a polymerization reaction product which is a complex mixture of polymers, with a relatively wide distribution of molecular weights. This wide distribution of molecular weights has an effect (generally detrimental) on the physical properties of the polymeric materials, e.g. decreased tensile strength, dart impact.

The molecular weight distribution (MWD), or polydispersity, is a known variable in polymers which is described as the ratio of weight average molecular weight (Mw) to number average molecular weight (Mn) (i.e., Mw/Mn), parameters which can be determined directly, for example by gel permeation chromatography techniques. The $I_{10}/I_2$ ratio, as described in ASTM D-1238, can be an indicator of the MWD in conventional heterogeneous ethylene polymers. The $I_{10}/I_2$ ratio is also an indicator of the shear sensitivity and processibility for ethylene polymers. Low density polyethylenes (LDPE) typically have a higher $I_{10}/I_2$ ratio than linear low density polyethylenes (LLDPE) or ultra low density linear polyethylenes (ULDPE) and are easier to melt process in fabrication equipment at comparable $I_2$ values.

Ethylene polymers having a narrow MWD and homogeneous comonomer distribution are known. These polymers can be produced using homogeneous "single site" catalysts, such as metallocene or vanadium catalysts. While the physical properties of these polymers are generally superior to heterogeneous polymers, they are often difficult to process with conventional melt fabrication equipment. The problems are manifested, for example, in their lack of ability to sustain a bubble in a blown film process, and by a "sag" when evaluated in blow molding processes. In addition, the melt fracture surface properties of these polymers are often unacceptable at high extrusion rates, a feature that makes them less desirable for use in equipment operating at current high speed extrusion (i.e., production) rates. Extruders often exhibit increased power consumption due to the low shear sensitivity of these polymers.

Use of the catalyst systems described in WO 94/07928 and WO-A-93141328 results in the production of unique polymers having the properties as taught in WO-A-93 08221. These polymers are substantially linear olefin polymers which are characterized as having a critical shear rate at the onset of surface melt fracture of at least 50 percent greater than the critical shear rate at the onset of surface melt fracture of a linear olefin polymer having about the same $I_2$ and Mw/Mn.

There is a need for a gas phase olefin polymerization catalyst that can be used more efficiently and effectively to polymerize or copolymerize ethylene with higher alpha-olefins, e.g. alpha-olefins having 3 to 20 carbon atoms. In practice, the commercial copolymers are made using monomers having only 3 to 8 carbon atoms (i.e., propylene, 1-butene, 1-hexene, 1-octene and 4-methyl-1-pentene) because of the low rate of reactivity and incorporation of the alpha olefins with larger carbon chains and, for gas phase processes, because of the lower concentration possible in the reactor for alpha-olefins with larger carbon chains. The traditional Ziegler catalysts are not particularly efficient or effective in incorporating the higher alpha-olefin comonomers into the polymer. The rate of reaction for the ethylene monomer is much greater than the rate of reaction for the higher alpha-olefin monomers in the copolymerization reaction using traditional multi-site Ziegler catalysts. Accordingly, due to the lower reaction rate of incorporating the longer chain comonomer into the growing polymer chain, the copolymer fractions containing the higher alpha-olefin comonomers are generally the lower molecular weight fraction having limited desirable physical properties. These factors also contribute to polymer particles sticking together or agglomerating in the gas phase process.

Even in the most current olefin copolymerization systems, there is still a need for a gas phase olefin polymerization catalyst which is able to incorporate efficiently larger amounts of higher alpha-olefins into a copolymer chain and give a polymeric product which has a narrow molecular weight distribution and is more homogeneous with respect to comonomer distribution than otherwise would be achieved using a Ziegler catalyst under comparable conditions.

The properties and advantages of linear homogeneous copolymers are described in U.S. Patent 3,645,992.

Canich et al. teach in U.S. Patent 5,057,475, U.S. Patent 5,026,798, and

U. S. Patent 5,096,867 a supported catalyst system which includes an inert support material, a Group IV B metal component and an alumoxane component for use in the production of high molecular weight polyolefins. While Canich et al. teaches the use of their catalysts under various reaction conditions, the gas phase examples of their '475 patent report polymer products having a relatively broad MWD (e.g. > 2.6) These catalyst systems require high levels of alumoxane which is expensive and result in undesirably high levels of aluminum residues in the final product.

There is also a need for a gas phase process to produce more homogeneous narrow molecular weight distribution polyolefins (MWD of 1.5-2.5), that have improved processability such as provided by substantially linear olefin polymers.

The present invention relates to a fluidized bed gas phase process for the production of an ethylene polymer, the process comprising reacting by contacting under polymerization conditions ethylene or ethylene and at least one of a copolymerizable alpha-olefin or diolefin in the presence of a supported homogeneous catalyst characterized by an absence of an activating amount of alumoxane comprising:

**A)** *1*. a metal complex corresponding to the formula:

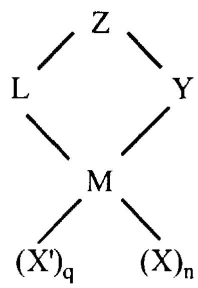

or dimers thereof,
wherein:

M is a Group 4 metal in the +3 or +4 formal oxidation state;

L is a group containing a cyclic, delocalized, aromatic, anionic, $\pi$ system comprising a cyclopentadienyl, indenyl, fluorenyl, tetrahydroindenyl, tetrahydrofluorenyl, or octahydrofluorenyl group, or an inertly substituted derivative thereof through which the L group is bound to M, and which L group is also bound to Z, said L group containing up to 60 nonhydrogen atoms;

Z is a moiety covalently bound to both L an Y, comprising boron, or a member of Group 14 of the Periodic Table of the Elements, said moiety having up to 60 nonhydrogen atoms;

Y is a moiety comprising nitrogen, phosphorus, sulfur or oxygen through which Y is covalently bound both Z and M, said moiety having up to 25 nonhydrogen atoms;

X' independently each occurrence is Lewis base containing up to 40 nonhydrogen atoms;

X independently each occurrence is a monovalent anionic moiety having up to 20 nonhydrogen atoms, provided however that neither X is an aromatic group that is $\pi$-bonded to M, optionally, two X groups may be covalently bound together forming a divalent dianionic moiety having both valences bound to M, or further optionally one or more X and one X' group may be bonded together thereby forming a moiety that is both covalently bound to M and coordinated thereto by means of Lewis base functionality;

q is a number from 0 to 1; and

n is 1 or 2 depending on the formal oxidation state of M; and either

**B)** *1.* an activating cocatalyst selected from the group consisting of neutral Lewis acids other than an alumoxane, and nonpolymeric, compatible noncoordinating ion forming compounds, wherein the molar ratio of metalcomplex/cocatalyst employed ranges from 1:10 to 1:1 with the exclusion of 1:1; or

**B)** *2.* electrochemically oxidizing the complex of the above formula to an active catalyst using electrolysis conditions in the presence of a supporting electrolyte comprising a noncoordinating inert anion; and

**C)** an inorganic oxide support chemically dehydrated with a chemical dehydrating agent, the inorganic support being substantially free of adsorbed moisture and surface hydroxyl groups.

Preferably, M in the metal complex is titanium, while X each occurrence is a monovalent ligand group of up

to 20 nonhydrogen atoms, and more preferably X is a $C_{1-20}$ hydrocarbyl group or 2X's taken together are a hydrocarbadiyl group or X is methyl or benzyl. Y preferably is -O-, -S-, -NR*-, -PR* -, and R* is independently a hydrocarbyl or silyl group having up to 12 nonhydrogen atoms.

The process of the invention preferably gives an ethylene polymer containing ≥ 80 mol percent of ethylene and ≤ 20 mol percent of one or more alpha-olefin or diolefin comonomers wherein the ethylene polymer is substituted, on average, with 0.01 to 3 branches, which have a chain length of at least one carbon atom less than the number of carbon atoms in said comonomers, per 1000 carbons. The resulting polymer preferably has a density of 0.85 to 0.96 $g/m^3$ and a melt index of less than 100 g/10 min measured in accordance with ASTM D-1238 (190°C/2.16 kg). Preferably, the support is silica, alumina or a mixture thereof, and more preferably pretreated, e.g. with triethyl aluminum. Preferably, the support is thermally dehydrated at a temperature between 100-1000°C for a period of 1-100 hours.

In a preferred embodiment the gas phase fluid bed reaction is carried out at a pressure less than 70 $kg/m^2$ (1000 psi) and at a temperature of from about 0 to 110°C.

The activating cocatalyst preferably is a tris (pentafluorophenyl) borane.

In another aspect, the process of the invention is conducted in at least two fluidized bed gas phase reactors connected in series or in parallel. Preferably, the catalyst system in one of these reactors further comprises a supported Ziegler catalyst.

The embodiment using two reactors in series can be seen as a process for in situ blending of polymers. Such a process comprises continuously contacting, under the polymerization conditions of the invention, a mixture of ethylene and at least one or more α-olefin or diolefin in at least two fluidized bed reactors connected in series, with a catalyst with the polymerization conditions being such that an ethylene copolymer having a higher melt index is formed in at least one reactor and an ethylene copolymer having a lower melt index is formed in at least one other reactor with the provisos that:

(a) in a reactor in which the lower melt index copolymer is made:

(1) said alpha-olefin or diolefin is present in a ratio of about 0.01 to about 3.5 total moles of alpha-olefin and diolefin per mole of ethylene; and

(2) hydrogen is present in a ratio of 0 to 0.3 mole of hydrogen per mole of ethylene;

(b) in a reactor in which higher melt index copolymer is made:

(1) said alpha-olefin or diolefin is present in a ratio of 0.005 to 3.0 total moles of alpha-olefin and diolefin per mole of ethylene; and

(2) hydrogen is present in a ratio of 0.05 to 2 moles of hydrogen per mole of ethylene,

(c) the mixture of catalyst and ethylene copolymer formed in one reactor in the series is transferred to an immediately succeeding reactor in the series.

(d) the catalyst system comprises a constrained geometry catalyst as define above and optionally, another catalyst.

(e) catalyst may be optionally added to each reactor in the series, provided that catalyst is added to at least the first reactor in the series.

The embodiment wherein two reactors in parallel are used can be seen as a process for in situ blending of polymers. Such a process comprises continuously contacting, under polymerization conditions, a mixture of ethylene and at least one α-olefin and/or diolefin in at least two fluidized bed reactors connected in parallel, with a catalyst with the polymerization conditions being such that an ethylene copolymer having a higher melt index is formed in at least one reactor and an ethylene copolymer having a lower melt index is formed in at least one other reactor with the provisos that:

(a) in a reactor in which the lower melt index copolymer is made:

(1) said alpha-olefin and/or diolefin is present in a ratio of 0.01 to 3.5 total moles of alpha-olefin or diolefin per mole of ethylene; and

(2) hydrogen is present in a ratio of 0 to 0.3 mole of hydrogen per mole of ethylene;

(b) in a reactor in which higher melt index copolymer is made:

(1) said alpha-olefin or diolefin is present in a ratio of 0.005 to 3.0 total moles of alpha-olefin and diolefin per mole of ethylene; and

(2) hydrogen is present in a ratio of 0.05 to 2 moles of hydrogen per mole of ethylene,

(c) the catalyst system comprises a constrained geometry catalyst as defined above and optionally, another catalyst.

In all embodiments of the invention, the constrained geometry catalyst is used in at least one of the reactors.

An advantage of this invention is that at least one constrained geometry catalyst can be used alone or in conjunction with at least one other catalyst in reactors operated in series or parallel.

Yet another advantage is that due to the ability of supported constrained geometry catalysts to incorporate efficiently longer chain higher alpha-olefin comonomers into a polymer, the range of copolymer densities which can be made in an conventional gas phase reactor without having to condense the recycle stream is dramatically increased.

Figure 1 graphically displays the structural characteristics of a traditional heterogeneous Ziegler polymerized LLDPE copolymer, a highly branched high pressure free radical LDPE, a homogeneously branched linear copolymer, and a substantially linear ethylene alpha olefin copolymer.

The Ethylene Copolymers

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering Groups.

The copolymers which may be prepared in the process of the present invention are copolymers of a major mol percent ($\geq$ 80%) of ethylene, and a minor mol percent ($\leq$ 20%) of one or more alpha olefins or diolefins. The polymers of the present invention can be homopolymers of ethylene or they can be interpolymers of ethylene with at least one $C_3$-$C_{20}$ alpha-olefin and/or $C_4$-$C_{18}$ diolefin. The polymers of the present invention can also be interpolymers of ethylene with at least one $C_3$-$C_{20}$ alpha-olefin, $C_4$-$C_{18}$ diolefin and/or other ethylenically unsaturated monomer.

Monomers usefully polymerized according to the present invention include, for example, ethylenically unsaturated monomers, conjugated or nonconjugated dienes, polyenes. Preferred monomers include the $C_2$-$C_{10}$ $\alpha$-olefins especially ethylene, propene, isobutylene, 1-butene, 1-hexene, 4-methyl-1-pentene, and 1-octene. Other preferred monomers include styrene, halo- or alkyl substituted styrenes, tetrafluoroethylene, vinylbenzocyclobutene, 1,4-hexadiene, 1,5-hexadiene, 1,7-octadiene, 4-vinylcyclohexene, and vinylcyclohexane, 2,5-norbornadiene, ethylidenenorbornene, 1,3-pentadiene, 1,4-pentadiene, 1,3-butadiene, isoprene and naphthenics (e.g., cyclopentene, cyclohexene and cyclooctene).

Throughout this disclosure, "melt index" or "$I_2$" is measured in accordance with ASTM D-1238 (190°C/2.16 kg); "$I_{10}$" is measured in accordance with ASTM D-1238 (190°C/10 kg). For linear polyolefins, especially linear polyethylene, it is well known that as Mw/Mn increases, $I_{10}/I_2$ also increases. With the ethylene or ethylene/$\alpha$-olefin or diene substantially linear olefin polymers that can be made by this invention, the $I_{10}/I_2$ may be increased without increasing Mw/Mn. The melt index for the ethylene or ethylene/$\alpha$-olefin substantially linear olefin polymers used herein is generally from 0.01 grams/10 minutes (g/10 min) to 1000 g/10 min, preferably from 0.01 g/10 min to 100 g/10 min, and especially from 0.01 g/10 min to 10 g/10 min.

The copolymers have a $I_{10}/I_2$ melt flow ratio of $\geq$6 to $\leq$ 18, and preferably of $\geq$ 7 to $\leq$ 14.

The whole interpolymer product samples and the individual interpolymer samples are analyzed by gel permeation chromatography (GPC) on a Waters 150C high temperature chromatographic unit equipped with three mixed porosity bed columns (available from Polymer Laboratories), operating at a system temperature of 140C. The solvent is 1,2,4-trichlorobenzene, from which 0.3 percent by weight solutions of the samples are prepared for injection. The flow rate is 1.0 milliliters/minute and the injection size is 200 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968, incorporated herein by reference) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_w = \Sigma w_i^* M_i$, where $w_i$ and $M_i$ are the weight fraction and molecular weight, respectively, of the $i^{th}$ fraction eluting from the GPC column.

The molecular weight distribution ($M_w/M_n$) for the ethylene polymers of this invention is generally less than about 5, preferably from 1.5 to 2.6, and especially from 1.7 to 2.3.

The density of the polymers in the present invention is measured in accordance with ASTM D-792 and is generally from 0.85 g/cm$^3$ to 0.96 g/cm$^3$, preferably from 0.865 g/cm$^3$ to 0.96 g/cm$^3$. The density of the copolymer, at a given melt index level for the copolymer, is primarily regulated by the amount of the comonomer which is copolymerized with the ethylene. In the absence of the comonomer, the ethylene would homopolymerize with the catalyst of the present invention to provide homopolymers having a density of about >0.95. Thus, the addition of progressively larger amounts of the comonomers to the copolymers results up to a point in a progressive lowering of the density of the copolymer. The amount of each of the various α-olefin comonomers or dienes needed to achieve the same result will vary from monomer to monomer, under the same reaction conditions. Thus to achieve the same results, in the copolymers, in terms of a given density, at a given melt index level, larger molar amounts of the different comonomers generally would be needed in the order of $C_3 > C_4 > C_5 > C_6 > C_7 > C_8$.

The term "linear" as used herein means that the ethylene polymer does not have long chain branching. That is, the polymer chains comprising the bulk linear ethylene polymer have an absence of long chain branching, as for example the traditional linear low density polyethylene polymers or linear high density polyethylene polymers made using Ziegler polymerization processes (e.g., USP 4,076,698 (Anderson et al.)), sometimes called heterogeneous polymers. The term "linear" does not refer to bulk high pressure branched polyethylene, ethylene/vinyl acetate copolymers, or ethylene/vinyl alcohol copolymers which are known to those skilled in the art to have numerous long chain branches. The term "linear" also refers to polymers made using uniform branching distribution polymerization processes, sometimes called homogeneous polymers, including narrow MWD (e.g. about 2) made using single site catalysts. Such uniformly branched or homogeneous polymers include those made as described in USP 3,645,992 (Elston) and those made using so-called single site catalysts in a batch reactor having relatively high ethylene concentrations (as described in U.S. Patent 5,026,798 (Canich) or in U.S. Patent 5,055,438 (Canich)) or those made using constrained geometry catalysts in a batch reactor also having relatively high olefin concentrations (as described in U.S. Patent 5,064,802 (Stevens et al.) or in EP 0 416 815 A2 (Stevens et al.)). The uniformly branched/homogeneous polymers are those polymers in which the comonomer is randomly distributed within a given interpolymer molecule or chain, and wherein substantially all of the interpolymer molecules have the same ethylene/comonomer ratio within that interpolymer, but these polymers, too, have an absence of long chain branching, as, for example, Exxon Chemical has taught in their February 1992 Tappi Journal paper (pp 99-103).

The term "substantially linear" as used means that the bulk polymer is substituted, on average, with 0.01 long chain branches/1000 total carbons (including both backbone and branch carbons) to 3 long chain branches/1000 total carbons. Preferred polymers are substituted with about 0.01 long chain branches/1000 total carbons to 1 long chain branch/1000 total carbons, more preferably from 0.05 long chain branches/1000 total carbons to 1 long chain branch/1000 total carbons, and especially from 0.3 long chain branches/1000 total carbons to 1 long chain branch/1000 total carbons.

As used herein, the term "backbone" refers to a discrete molecule, and the term "polymer" or "bulk polymer" refers in the conventional sense to the polymer as formed in a reactor. For the polymer to be a "substantially linear" polymer, the polymer must have at least enough molecules with long chain branching such that the average long chain branching in the bulk polymer is at least an average of 0.01 long chain branches/1000 total carbons.

The term "bulk" polymer means the polymer which results from the polymerization process and, for the substantially linear polymers, includes molecules having both an absence of long chain branching, as well as molecules having long chain branching. Thus a "bulk" polymer includes all molecules formed during polymerization. It is understood that, for the substantially linear polymers, not all molecules have long chain branching, but a sufficient amount do such that the average long chain branching content of the bulk polymer positively affects the melt rheology (i.e., the melt fracture properties).

Long chain branching (LCB) is defined herein as a chain length of at least one (1) carbon less than the number of carbons in the comonomer, whereas short chain branching (SCB) is defined herein as a chain length of the same number of carbons in the residue of the comonomer after it is incorporated into the polymer molecule backbone. For example, an ethylene/1-octene substantially linear polymer has backbones with long chain branches of at least seven (7) carbons in length, but it also has short chain branches of only six (6) carbons in length.

Long chain branching can be distinguished from short chain branching by using $^{13}C$ nuclear magnetic resonance (NMR) spectroscopy and to a limited extent, e.g. for ethylene homopolymers, it can be quantified using the method of Randall (Rev. Macromol.Chem. Phys., C29 (2&3), p. 285-297). However as a practical matter, current $^{13}C$ nuclear magnetic resonance spectroscopy cannot determine the length of a long chain branch in excess of six (6) carbon atoms and as such, this analytical technique cannot distinguish between a seven (7) carbon branch and a

seventy (70) carbon branch. The long chain branch can be as long as about the same length as the length of the polymer backbone.

U.S. Patent 4,500,648 teaches that long chain branching frequency (LCB) can be represented by the equation $LCB=b/M_w$ wherein b is the weight average number of long chain branches per molecule and $M_w$ is the weight average molecular weight. The molecular weight averages and the long chain branching characteristics are determined by gel permeation chromatography and intrinsic viscosity methods.

The SCBDI (Short Chain Branch Distribution Index) or CDBI (Composition Distribution Branch Index) is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, Journal of Polymer Science, Poly. Phys. Ed., Vol. 20, p. 441 (1982), or as described in U.S. Patent 4,798,081. The SCBDI or CDBI for the substantially linear ethylene polymers of the present invention is typically greater than 30 percent, preferably greater than 50 percent, more preferably greater than 80 percent, and most preferably greater than 90 percent.

"Melt tension" is measured by a specially designed pulley transducer in conjunction with the melt indexer. Melt tension is the load that the extrudate or filament exerts while passing over the pulley onto a 3.08 cm (two inch) drum that is rotating at the standard speed of 30 rpm. The melt tension measurement is similar to the "Melt Tension Tester" made by Toyoseiki and is described by John Dealy in "Rheometers for Molten Plastics", published by Van Nostrand Reinhold Co. (1982) on page 250-251. The melt tension of the substantially linear polymers of this invention is also surprisingly good, e.g., as high as 2 grams or more. For the substantially linear ethylene interpolymers of this invention, especially those having a very narrow molecular weight distribution (i.e., $M_w/M_n$ from 1.5 to 2.5), the melt tension is typically at least 5 percent, and can be as much as 60 percent, greater than the melt tension of a conventional linear ethylene interpolymer having a melt index, polydispersity and density each within ten percent of the substantially linear ethylene polymer.

A unique characteristic of the substantially linear polymer is a highly unexpected flow property where the $I_{10}/I_2$ value is essentially independent of polydispersity index (i.e., $M_w/M_n$). This is contrasted with conventional Ziegler polymerized heterogeneous polyethylene resins and with conventional single site catalyst polymerized homogeneous polyethylene resins having rheological properties such that as the polydispersity index increases, the $I_{10}/I_2$ value also increases.

Processing Index Determination

The "rheological processing index" (PI) is the apparent viscosity (in kpoise) of a polymer and is measured by a gas extrusion rheometer (GER). The GER is described by M. Shida, R.N. Shroff and L.V. Cancio in Polym. Eng. Sci., Vol. 17, no. 11, p. 770 (1977), and in "Rheometers for Molten Plastics" by John Dealy, published by Van Nostrand Reinhold Co. (1982) on page 97-99. The processing index is measured at a temperature of 190°C, at nitrogen pressure of $17 . 2 * 10^6$ N/m$^2$ gauge (2500 psig) using a (752 micrometers (0.0296 inch) diameter (preferably 363 µm (0.0143 inch) diameter die for high flow polymers, e.g. 50-100 melt index or greater), 20:1 L/D die having an entrance angle of 180 degrees. The GER processing index is calculated in millipoise units from the following equation:

$$PI = 21.5\ N/cm^2\ (2.15 \times 10^6\ dyne/cm^2)\ /(1000 \times shear\ rate),$$

where: 21.5 N/cm$^2$ (2.15 X $10^6$ dyne/cm$^2$) is the shear stress at $17.2 * 10^6$ N/m$^2$ (2500 psi), and the shear rate is the shear rate at the wall as represented by the following equation:

$$32\ Q'/\ (60\ sec/min)(0.745)(Diameter \times 2.54\ cm/in)^3,$$

where:

Q' is the extrusion rate (g/min),
0.745 is the melt density of polyethylene (g/cm$^3$), and
Diameter is the orifice diameter of the capillary (inches).

The PI is the apparent viscosity of a material measured at apparent shear stress of (2.15 X $10^6$ dyne/cm$^2$) 21.5 N/cm$^2$.

For the substantially linear ethylene polymers (or ethylene/alpha-olefin copolymers or interpolymers) produced by this invention, the PI is less than or equal to 70 percent of that of a conventional linear ethylene polymer (or

ethylene/alpha-olefin copolymer or interpolymer) having an $I_2$, $M_w/M_n$ and density each within ten percent of the substantially linear ethylene polymer.

An apparent shear stress vs. apparent shear rate plot is used to identify the melt fracture phenomena over a range of nitrogen pressures from 36.1 * $10^6$ to 3.4 * $10^6$ N/m$^2$ gauge (5250 to 500 psig) using the die or GER test apparatus previously described. According to Ramamurthy in Journal of Rheology, 30(2), 337-357,1986, above a certain critical flow rate, the observed extrudate irregularities may be broadly classified into two main types: surface melt fracture and gross melt fracture.

Surface melt fracture occurs under apparently steady flow conditions and ranges in detail from loss of specular gloss to the more severe form of "sharkskin". In this disclosure, the onset of surface melt fracture is characterized at the beginning of losing extrudate gloss at which the surface roughness of extrudate can only be detected by 40X magnification. The critical shear rate at onset of surface melt fracture for the substantially linear ethylene polymers is at least 50 percent greater than the critical shear rate at the onset of surface melt fracture of a linear ethylene polymer having about the same 12 and $Mw/M_n$. Preferably, the critical shear stress at onset of surface melt fracture for the substantially linear ethylene polymers of the invention is greater than about 28 N/cm$^2$ (2.8 X $10^6$ dyne/cm$^2$).

Gross melt fracture occurs at unsteady flow conditions and ranges in detail from regular (alternating rough and smooth, helical) to random distortions. For commercial acceptability, (e.g., in blown film products), surface defects should be minimal, if not absent. The critical shear rate at onset of surface melt fracture (OSMF) and critical shear stress at onset of gross melt fracture (OGMF) are based on the changes of surface roughness and configurations of the extrudates extruded by a GER. For the substantially linear ethylene polymers of the invention, the critical shear stress at onset of gross melt fracture is preferably greater than (4 X $10^6$ dyne/cm$^2$) 40 N/cm$^2$.

For the processing index and melt fracture tests, the ethylene polymers and substantially linear ethylene copolymers contain antioxidants such as phenols, hindered phenols, phosphites or phosphonites, preferably a combination of a phenol or hindered phenol and a phosphite or a phosphonite.

Suitable catalysts for use herein comprise constrained geometry complexes as claimed in combination with an activating cocatalyst or activating technique. Examples of such constrained geometry complexes, methods for their preparation and for their activation are disclosed in EP-A-416,815; EP-A-468,651; EP-A-514,828; and EP-A-520,732 as well as U.S. Patents: 5,055,438, 5,057,475, 5,096,867, 5,064,802 and 5,132,380.

Suitable provided metal complexes for use herein correspond to the formula:

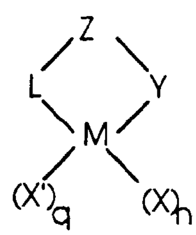

or dimers thereof,
wherein:

M is a Group 4 metal in the +3 or +4 formal oxidation state, preferably M is titanium or zirconium, most preferably titanium;
L is a group containing a cyclic, delocalized, aromatic, anionic, Π system through which the L group is bound to M, and which L group is also bound to Z, said L group containing up to 60 nonhydrogen atoms;
Z is a moiety covalently bound to both L and Y, comprising boron, or a member of Group 14 of the Periodic Table of the Elements, said moiety having up to 60 non-hydrogen atoms;
Y is a moiety comprising nitrogen, phosphorus, sulfur or oxygen through which Y is covalently bound to both Z and M, said moiety having up to 25 nonhydrogen atoms;
X' independently each occurrence is a Lewis base containing up to 40 nonhydrogen atoms;
X independently each occurrence is a monovalent anionic moiety having up to 20 non-hydrogen atoms, provided however that neither X is an aromatic group that is n-bonded to M, optionally, two X groups may be covalently bound together forming a divalent dianionic moiety having both valences bound to M, or further optionally one or more X and one X' group may be bonded together thereby forming a moiety that is both covalently bound to M and coordinated thereto by means of Lewis base functionality;
q is a number from 0 to 1; and
n is 1 or 2 depending on the formal oxidation state of M.

In one embodiment of this invention, the complexes can be prepared by contacting a precursor Group 4 metal compound containing 2 displaceable ligand groups with a source of a dianionic ligand, $(L\text{-}Z\text{-}Y)^{2-}$, and optionally, if the precursor compound is in a lower formal oxidation state than the desired complex, oxidizing the resulting complex, or if the precursor compound is in a higher formal oxidation state than the desired complex, reducing the resulting complex.

Further according to the present invention there is provided a catalyst system useful for polymerization of addition polymerizable monomers comprising:

A)

1) one or more of the above metal complexes or the reaction product of the above described process, and
2) one or more activating cocatalysts;

or

B) the reaction product formed by converting one or more of the above metal complexes or the reaction product of the above described process to an active catalyst by use of an activating technique.

By the term "divalent derivatives" is meant that L is bonded to both Z and M. Suitable inert substituents on L include hydrogen, hydrocarbyl, halocarbyl, halohydrocarbyl, silyl, germyl, halo, amino, phosphino, cyano, hydrocarbyloxy, siloxy and combinations thereof, each of said inert substituents having up to 20 nonhydrogen atoms, or optionally, two or more such substituents (except hydrogen, cyano or halo) together form a ring structure, particularly a fused ring structure. Desirably, such L groups contain up to 50 non-hydrogen atoms. Cyclopentadienyl, indenyl, fluorenyl, tetrahydroindenyl, tetrahydrofluorenyl, and octahydrofluorenyl and the foregoing inertly substituted derivatives thereof are specifically included within the above definition of L groups.

Preferred examples of X groups include: hydrocarbyl, carboxylate, sulfonate, hydrocarbyloxy, siloxy, amido, phosphido, sulfido, and silyl groups; as well as halo-, amino-, hydrocarbyloxy-, siloxy-, silyl-, and phosphino-substituted derivatives of such hydrocarbyl, carboxylate, sulfonate, hydrocarbyloxy, siloxy, amido, phosphido, sulfido, or silyl groups; hydride, halide and cyanide, said X group having up to 20 nonhydrogen atoms; or alternatively, two X groups together are a hydrocarbadiyl, or a substituted hydrocarbadiyl group wherein the substituent is independently each occurrence a hydrocarbyl or silyl group of up to 20 nonhydrogen atoms, said group forming a metallacycle, preferably a metallacyclopentene, with M.

More preferred X groups are hydride, hydrocarbyl (including cyclohydrccarbyl), hydrocarbyloxy, amido, silyl, silylhydrocarbyl, siloxy, halide and aminobenzyl. Especially suited are hydride, chloride, methyl, neopentyl, benzyl, phenyl, dimethylamido, 2-(N,N-dimethylamino)benzyl, allyl, methylsubstituted allyl (all isomers), pentadienyl, 2-methylpentadienyl, 3-methylpentadienyl, 2,4-dimethylpentadienyl, 6,6-dimethylcyclohexadienyl, and trimethylsilylmethyl. More preferred of two X groups together are 2-butene-1,4-diyl, 2,3-dimethyl-1,4-diyl, 2-methyl-2-butene- 1,4-diyl, butane-1,4-diyl, propane-1,3-diyl, pentane-1,5-diyl, and 2-pentene-1,5-diyl.

Preferred X' groups include phosphines, phosphites, ethers, amines, carbon monoxide, salts of Group 1 or 2 metals, and mixtures of the foregoing X' groups. Examples of the foregoing especially include trimethylphosphine, triethylphosphine, trifluorophosphine, triphenylphosphine, bis-1,2- (dimethylphosphino)ethane, trimethylphosphite, triethylphosphite, dimethylphenylphosphite, tetrahydrofuran, diethyl ether, carbon monoxide, pyridine, bipyridine, tetramethylethylenediamine (TMEDA), dimethoxyethane (DME), dioxane, triethylamine, lithium chloride, and magnesium chloride.

Further preferred metal coordination complexes used according to the present invention correspond to the formula:

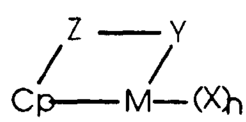

wherein Z, M, Y, X and n are previously defined; and

Cp is a $C_5H_4$ group bound to Z and bound in an η5 bonding mode to M or is such an η5 bound group substituted with from one to four substituents independently selected from hydrocarbyl, silyl, germyl, halo, cyano, and combinations thereof, said substituent having up to 20 nonhydrogen atoms, and optionally, two such substituents (except cyano or halo) together cause Cp to have a fused ring structure.

More preferred metal coordination complexes used according to the present invention correspond to the formula:

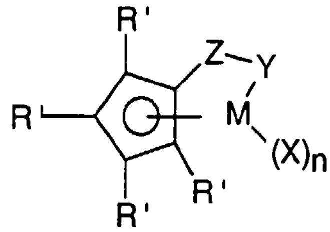

wherein:

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
Y is -O-, -S-, -NR*-, -PR*-;
Z is $SiR^*_2$, $CR^*_2$, $SiR^*_2SiR^*_2$, $CR^*_2CR^*_2$, CR*=CR*, CR*2SiR*$_2$, or $GeR^*_2$; wherein:
R* each occurrence is independently hydrogen, or a member selected from hydrocarbyl, silyl, halogenated alkyl, halogenated aryl, and combinations thereof, said R* having up to 20 non-hydrogen atoms, and optionally, two R* groups from Z (when R* is not hydrogen), or an R* group from Z and an R* group from Y form a ring system.
M is titanium or zirconium in the +3 or +4 formal oxidation state; and
X is chloro, hydrocarbyl, hydrocarbyloxy, silyl or N, N-dialkylamino substituted hydrocarbyl group;
n is 1 or 2.

Preferably, R' independently each occurrence is hydrogen, hydrocarbyl, silyl, halo and combinations thereof said R' having up to 10 nonhydrogen atoms, or two R' groups (when R' is not hydrogen or halo) together form a divalent derivative thereof; most preferably, R' is hydrogen, methyl, ethyl, propyl, butyl, pentyl, hexyl, (including where appropriate all isomers), cyclopentyl, cyclohexyl, norbornyl, benzyl, or phenyl or two R' groups (except hydrogen or halo) are linked together, the entire $C_5R'_4$ group thereby being, for examply, an indenyl, tetrahydroindenyl, fluorenyl, tetrahydrofluorenyl, or octahydrofluorenyl group.
Further, preferably, at least one of R' or R* is an electron donating moiety. By the term "electron donating" is meant that the moiety is more electron donating than hydrogen. Thus, highly preferably Y is a nitrogen or phosphorus containing group corresponding to the formula -N(R")- or -P(R")-, wherein R" is $C_{1-12}$ hydrocarbyl.
Most highly preferred metal coordination complexes are amidosilane- or amidoalkanedivl- compounds corresponding to the formula:

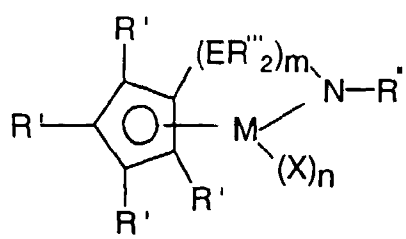

wherein:

R' is independently each occurence selected from hydrogen, silyl, hydrocarbyl and combinations thereof, said R' having up to 10 carbon or silicon atoms, or two such R' groups on the substituted cyclopentadienyl group (when R' is not hydrogen) together form a divalent derivative thereof connected to adjacent positions of cyclopentadienyl ring;
E is independently each occurrence silicon or carbon.
R"' is independently each occurrence hydrogen or $C_{1-10}$ hydrocarbyl;
R" is hydrocarbyl or silyl, especially an aryl, benzyl, hydrocarbyl substituted aryl, hydrocarbyl substituted benzyl, secondary or tertiary alkyl or tertiary silyl group of up to 12 nonhydrogen atoms;
M is titanium in the +3 or +4 formal oxidation state;
m is 1 to 2;

n is 1 or 2;
X is methyl, allyl, phenyl, benzyl, chloro, 2-(N,N-dimethylamino)benzyl or trimethylsilylmethyl.

Examples of the metal complexes used according to the present invention include compounds wherein R" is methyl, ethyl, propyl, butyl, pentyl, hexyl (including all isomers of the foregoing where applicable), cyclododecyl, norbornyl, benzyl, or phenyl; $(ER'''_2)_m$ is dimethylsilane, or ethanediyl; and the cyclic delocalized aromatic, anionic π-bonded group is cyclopentadienyl, tetramethylcyclopentadienyl, indenyl, tetrahydroindenyl, fluorenyl, tetrahydrofluorenyl or octahydrofluorenyl.

Specific highly preferred compounds include: 1-(tert-butylamido)-2-(tetramethyl-$\eta^5$-cyclopentadienyl) ethanediyltitanium dimethyl, 1-(tertbutylamido)-2-(tetramethyl-$\eta^5$- cyclopentadienyl) ethanediyltitanium dibenzyl, 1-(tert-butylamido)-2-(tetramethyl-$\eta^5$- cyclopentadienyl)dimethylsilanetitanium dimethyl, 1-(tert- butylamido)-2-(tetramethyl-$\eta^5$- cyclopentadienyl)dimethylsilanetitanium dibenzyl, (methylamido)(tetramethyl-$\eta^5$- cyclopentadienyl)dimethylsilanetitanium dimethyl, (methylamido)(tetra-methyl-$\eta^5$- cyclopentadienyl)dimethylsilanetitanium dibenzyl, (phenylamido)(tetramethyl-$\eta^5$- cyclopentadienyl)dimethylsilanetitanium dimethyl, (phenylamido)(tetramethyl-$\eta^5$- cyclopentadienyl) dimethylsilanetitanium dibenzyl, (benzylamido)(tetramethyl-$\eta^5$- cyclopentadienyl)dimethylsilanetitanium dimethyl, (benzylamido)(tetramethyl-$\eta^5$- cyclopentadienyl)dimethylsilanetitanium dibenzyl, (tert- butylamido) ($\eta^5$-cyclopentadienyl)-1,2-ethanediyltitanium dimethyl, (tert-butylam ido)($\eta^5$-cyclopentadienyl)-1,2-ethanediyltitanium dibenzyl, (tert-butylamido)($\eta^5$- cyclopentadienyl)dimethylsilanetitanium dimethyl, (tert- butylamido)($\eta^5$- cyclopentadienyl)dimethylsilanetitanium dibenzyl, (methylamido)($\eta^5$- cyclopentadienyl)dimethylsilanetitanium dimethyl, (t-butylamido)($\eta^5$- cyclopentadienyl)dimethylsilanetitanium dibenzyl, (t-butylamido)indenyldimethylsilanetitanium dimethyl, (t-butylamido) indenyldimethylsilanetitanium dibenzyl, (benzylamido)indenyldimethylsilanetitanium dibenzyl, (t-butylamido)(tetramethyl-$\eta^5$-cyclopentadienyl)dimethylsilanetitanium (III) allyl, (t-butylamido)(tetramethyl-$\eta^5$-cyclopentadienyl)dimethylsilanetitanium (III) 2,4-dimethylpentadienyl, (t-cyclododecylamido)(tetramethyl-$\eta^5$- cyclopentadienyl)dimethylsilanetitanium (III) 2-(N,N-dimethylamino)-benzyl, (t-butylamido)(tetramethyl-$\eta^5$-cyclopentadienyl)dimethylsilanetitanium (III) 2-(N,N-dimethylamino)benzyl, 1-(t-butylamido)-2-(tetramethyl-$\eta^5$-cyclopentadienyl)ethanediyltitanium (III) 2-(N,N-dimethylamino)benzyl 1-(t-butylamido)-2-($\eta^5$-indenyl)ethanediyltitanium dimethyl, 1-t-(butylamido)-2-($\eta^5$-indenyl) ethanediyltitanium dibenzyl, (t-butylamido)($\eta^5$-tetrahydroindenyl)dimethylsilanetitanium dimethyl, (t-butylamido)($\eta^5$-tetrahydroindenyl)dimethylsilanetitanium diphenyl, 1-(t-butylamido)-2-($\eta^5$-tetrahydroindenyl)ethanediyltitanium dimethyl, 1-(t-butylamido)-2-($\eta^5$-tetrahydroindenyl)ethanediyltitanium dibenzyl, (t-butylamido)($\eta^5$-fluorenyl)dimethylsilanetitanium dimethyl, (t-butylamido)($\eta^5$-fluorenyl)dimethylsilanetitanium dibenzyl, 1-t-butylamido)-2-($\eta^5$-fluorenyl)ethanediyltitanium dimethyl, 1-(t-butylamido)-2-($\eta^5$-fluorenyl)ethanediyltitanium dibenzyl, (t-butylamido)($\eta^5$-tetrahydrofluorenyl)dimethylsilanetitanium dimethyl, (t-butylamido)($\eta^5$-tetrahydrofluorenyl)dimethylsilanetitanium dibenzyl, 1-(t-butylamido)-2-($\eta^5$-tetrahydrofluorenyl)ethanediyltitanium dimethyl, 1-(t-butylamido)-2-($\eta^5$-tetrahydrofluorenyl)ethanediyltitanium dibenzyl (t-butylamido)($\eta^5$-octahydrofluorenyl)dimethylsilanetitanium dimethyl (t-butylamido)($\eta^5$-octahydrofluorenyl)dimethylsilanetitanium dibenzyl, 1-(t-butylamido)-2-($\eta^5$-octahydrofluorenyl)ethanediyltitanium dimethyl, 1-(t-butylamido)-2-($\eta^5$-octahydrofluorenyl)ethanediyltitanium dibenzyl, and the corresponding zirconium or hafnium coordination complexes.

The skilled artisan will recognize that additional members of the foregoing list will include the corresponding zirconium or hafnium containing derivatives, as well as complexes that are variously substituted as herein defined.

Most highly preferred metal complexes used according to the present invention are (1-tert-butylamido)-2-(tetramethyl-$\eta^5$-cyclopentadienyl)ethanediyltitanium dimethyl, 1-(tert-butylamido)-2-(tetramethyl-$\eta^5$- cyclopentadienyl)ethanediyltitanium dibenzyl, 1-(tert-butylamido)-2-(tetramethyl-$\eta^5$- cyclopentadienyl)dimethylsilanetitanium dimethyl, 1-(tert-butylamido)-2-tetramethyl-$\eta^5$- cyclopentadienyl )dimethylsilanetitanium dibenzyl, (t-butylamido)(tetramethyl-$\eta^5$-cyclopentadienyl)dimethylsilanetitaniumdimethyl 1-(t-butylamido)-2-(tetramethyl-$\eta^5$-cyclopentadienyl)ethanediyltitaniumdibenzyl (t-butylamido)($\eta^5$-tetrahydroindenyl)dimethylsilanetitanium dimethyl, (t-butylamido)($\eta^5$-tetrahydroindenyl)dimethylsilanetitanium diphenyl, 1-(t-butylamido)-2-($\eta^5$-tetrahydroindenyl)ethanediyltitanium dimethyl, (t-butylamido)($\eta^5$-tetrahydrofluorenyl)dimethylsilanetitanium dimethyl, (t-butylamido)($\eta^5$-tetrahydrofluorenyl)dimethylsilanetitanium dibenzyl, 1-(t-butylamido)-2-($\eta^5$-tetrahydrofluorenyl)ethanediyltitanium dimethyl, 1-(t-butylamido)-2-($\eta^5$-tetrahydrofluorenyl)ethanediyltitanium dibenzyl (t-butylamido)($\eta^5$-octahydrofluorenyl)dimethylsilanetitanium dimethyl (t-butylamido)($\eta^5$-octahydrofluorenyl)dimethylsilanetitanium dibenzyl, 1-(t-butylamido)-2-($\eta^5$-octahydrofluorenyl) ethanediyltitanium dimethyl, 1-(t-butylamido)-2-($\eta^5$-octahydrofluorenyl)ethanediyltitanium dibenzyl,

The metal complexes used in this invention are rendered catalytically active by combination with an activating cocatalyst or by use of an activating technique. Suitable activating cocatalysts for use herein include neutral Lewis acids other than an alumoxane, such as C1-30 hydrocarbyl substituted Group 13 compounds, especially tri(hydrocarbyl)aluminum- or tri(hydrocarbyl)boron compounds and halogenated (including perhalogenated) derivatives thereof, having from 1 to 10 carbons in each hydrocarbyl or halogenated hydrocarbyl group, more especially perfluorinated tri (aryl)boron compounds, and most especially tris(pentafluorophenyl)borane; nonpolymeric, compatible, noncoordinating, ion forming compounds (including the use of such compounds under oxidizing conditions), especially the use of

ammonium-, phosphonium-, oxonium-, carbonium-, silylium- or sulfonium- salts of compatible, noncoordinating anions, or ferrocenium salts of compatible, noncoordinating anions; bulk electrolysis (explained in more detail hereinafter); and combinations of the foregoing activating cocatalysts and techniques. The foregoing activating cocatalysts and activating techniques have been previously taught with respect to different metal complexes in the following references: EP-A-277,003, US-A-5,153,157, US-A-5,064,802, EP-A-468,651, EP-A-520,732 and EP-A-520,732.

Combinations of neutral Lewis acids, especially the combination of a trialkyl aluminum compound having from 1 to 4 carbons in each alkyl group and a halogenated tri(hydrocarbyl)boron compound having from 1 to 10 carbons in each hydrocarbyl group, especially tris(pentafluorophenyl)borane, and combinations of neutral Lewis acids, especially tris(pentafluorophenyl)borane, with nonpolymeric, compatible noncoordinating ion-forming compounds are especially desirable activating cocatalysts.

Suitable ion forming compounds useful as cocatalysts in one embodiment of the present invention comprise a cation which is a Bronsted acid capable of donating a proton, and a compatible, noncoordinating anion, $A^-$. As used herein, the term "noncoordinating" means an anion or substance which either does not coordinate to the Group 4 metal containing precursor complex and the catalytic derivative derived therefrom, or which is only weakly coordinated to such complexes thereby remaining sufficiently labile to be displaced by a neutral Lewis base. A noncoordinating anion specifically refers to an anion which when functioning as a charge balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

Preferably such cocatalysts may be represented by the following general formula:

$$[L^*\text{-}H]^+{}_d[A^{d-}]$$

wherein:

- $L^*$ is a neutral Lewis base;
- $[L^*\text{-}H]+$ is a Bronsted acid;
- $A^{d-}$ is a noncoordinating, compatible anion having a charge of $d^-$, and
- d is an integer from 1 to 3.

More preferably $A^{d-}$ corresponds to the formula: $[M'^{k}+Q_{n}']^{d-}$ wherein:

- k is an integer from 1 to 3;
- n' is an integer from 2 to 6;
- n'-k = d;
- M' is an element selected from Group 13 of the Periodic Table of the Elements; and
- Q independently each occurrence is selected from hydride, dialkylamido, halide, hydrocarbyl, hydrocarbyloxy, halosubstituted-hydrocarbyl, halosubstituted hydrocarbyloxy, and halo substituted silylhydrocarbyl radicals (including perhalogenated hydrocarbyl- perhalogenated hydrocarbyloxy- and perhalogenated silylhydrocarbyl radicals), said Q having up to 20 carbons with the proviso that in not more than one occurrence is Q halide. Examples of suitable hydrocarbyloxide Q groups are disclosed in U. S. Patent 5,296,433,

In a more preferred embodiment, d is one, i. e., the counter ion has a single negative charge and is $A^-$. Activating cocatalysts comprising boron which are particularly useful in the preparation of catalysts of this invention may be represented by the following general formula: $[L^*\text{-}H]+ [BQ_4]^-$ wherein:

- $[L^*\text{-}H]+$ is as previously defined;
- B is boron in a valence state of 3; and
- Q is a hydrocarbyl-, hydrocarbyloxy-, fluorinated hydrocarbyl-, fluorinated hydrocarbyloxy-, or fluorinated silylhydrocarbyl- group of up to 20 nonhydrogen atoms, with the proviso that in not more than one occasion is Q hydrocarbyl. Most preferably, Q is each occurrence a fluorinated aryl group, especially, a pentafluorophenyl group.

Illustrative, but not limiting, examples of boron compounds which may be used as an activating cocatalyst in the preparation of the improved catalysts of this invention are tri-substituted ammonium salts such as: trimethylammonium tetraphenylborate, triethylammonium tetraphenylborate, tripropylammonium tetraphenylborate, tri(n-butyl)ammonium tetraphenylborate, tri(t-butyl)ammonium tetraphenylborate, N,N-dimethylanilinium tetraphenylborate, N,N-diethylanilinium tetraphenylborate, N,N-dimethyl-2,4,6-trimethylanilinium tetraphenylborate, trimethylammonium tetrakis (pentafluorophenyl) borate, triethylammonium tetrakis(pentafluorophenyl) borate, tripropylammonium tetrakis(pentafluorophenyl) borate, tri(n-butyl)ammonium tetrakis(pentafluorophenyl) borate, tri(secbutyl)ammonium tetrakis(pentafluorophenyl) borate, N,N-dimethylanilinium tetrakis(pentafluorophenyl) borate, N,N-dimethylanilinium n-butyltris (pentafluorophenyl) borate, N,N-dimethylanilinium benzyltris(pentafluorophenyl) borate, N,N-dimethylanilinium tetrakis (4-(trimethylsilyl)-2,3,5,6-tetrafluorophenyl) borate, N,N-dimethylanilinium tetrakis(4-(triisopropylsilyl)-2,3,5,6-tetrafluorophenyl) borate, N,N-dimethylanilinium pentafluorophenoxytris(pentafluorophenyl) borate, N,N-diethylanilinium tetrakis(pentafluorophenyl) borate, N,N-dimethyl-2,4,6-trimethylanilinium tetrakis(pentafluorophenyl) borate, trimethylammonium tetrakis(2,3,4,6-tetrafluorophenyl)borate, triethylammonium tetrakis(2,3,4,6-tetrafluorophenyl) borate, tripropylammonium tetrakis(2,3,4,6-tetrafluorophenyl) borate, tri(n-butyl)ammonium tetrakis (2,3,4,6-tetrafluorophenyl) borate, dimethyl(t-butyl)ammonium tetrakis(2,3,4,6-tetrafluorophenyl) borate, N,N-dimethylanilinium tetrakis(2,3,4,6-tetrafluorophenyl) borate, N,N-diethylanilinium tetrakis(2,3,4,6-tetrafluorophenyl) borate, and N,N-dimethyl-2,4,6-trimethylanilinium tetrakis(2,3,4,6-tetrafluorophenyl) borate; dialkyl ammonium salts such as: di-(i-propyl)ammonium tetrakis(pentafluorophenyl) borate, and dicyclohexylammonium tetrakis(pentafluorophenyl) borate; tri-substituted phosphonium salts such as: triphenylphosphonium tetrakis(pentafluorophenyl) borate, tri(o-tolyl) phosphonium tetrakis(pentafluorophenyl) borate, and tri(2,6-dimethylphenyl)phosphonium tetrakis(pentafluorophenyl) borate; di-substituted oxonium salts such as: diphenyloxonium tetrakis(pentafluorophenyl) borate, di(o-tolyl)oxonium tetrakis(pentafluorophenyl) borate, and di(2,6-dimethylphenyl)oxonium tetrakis(pentafluorophenyl) borate; di-substituted sulfonium salts such as: diphenylsulfonium tetrakis(pentafluorophenyl) borate, di(o-tolyl)sulfonium tetrakis(pentafluorophenyl) borate, and di(2,6-dimethylphenyl)sulfonium tetrakis(pentafluorophenyl) borate.

Preferred $[L^*\text{-}H]^+$ cations are N,N-dimethylanilinium and tributylammonium.

Another suitable ion forming, activating cocatalyst comprises a salt of a cationic oxidizing agent and a noncoordinating, compatible anion represented by the formula:

$$(Ox^{e+})_d(A^{d-})_e$$

wherein:

$Ox^{e+}$ is a cationic oxidizing agent having a charge of $e^+$;
e is an integer from 1 to 3; and
$A^{d-}$ and d are as previously defined.

Examples of cationic oxidizing agents include: ferrocenium, hydrocarbyl-substituted ferrocenium, $Ag^+$, or $Pb^{+2}$. Preferred embodiments of $A^{d-}$ are those anions previously defined with respect to the Bronsted acid containing activating cocatalysts, especially tetrakis(pentafluorophenyl)borate.

Another suitable ion forming, activating cocatalyst comprises a compound which is a salt of a carbenium ion and a noncoordinating, compatible anion represented by the formula:

$$©^+ A^-$$

wherein:

$©^+$ is a $C_{1-20}$ carbenium ion; and
$A^-$ is as previously defined. A preferred carbenium ion is the trityl cation, i.e., triphenylmethylium.

A further suitable ion forming, activating cocatalyst comprises a compound which is a salt of a silylium ion and a noncoordinating, compatible anion represented by the formula:

$$R_3Si(X')_q{}^+A^-$$

wherein:

R is $C_{1-10}$ hydrocarbyl, and X', q and $A^-$ are as previously defined.

Preferred silylium salt activating cocatalysts are trimethylsilylium tetrakis(pentafluorophenyl)borate, triethylsilyliumtetrakis(pentafluoro) phenyl)borate and ether substituted adducts thereof. Silylium salts have been previously generically disclosed in J. Chem Soc. Chem.Comm., 1993, 383-384, as well as Lambert, J. B., et al., Organometallics, 1994, 13, 2430-2443. The use of the above silylium salts as activating cocatalysts for addition polymerization catalysts is claimed in United States Patent Application entitled, Silylium Cationic Polymerization Activators For Metallocene Complexes, filed in the names of David Neithamer, David Devore, Robert LaPointe and Robert Mussell on September 12, 1994.

Certain complexes of alcohols, mercaptans, silanols, and oximes with tris(pentafluorophenyl)borane are also effective catalyst activators and may be used according to the present invention, Such cocatalysts are disclosed in USP 5,296,433. Preferred complexes include phenol, especially fluorinated phenol adducts of tris(pentafluorophenyl) borane. The latter cocatalysts are disclosed and claimed in United States Patent Application entitled, Phenol-Borane Adduct Polymerization Activators For Metallocene Complexes, filed in the name of Peter Nickias on September 12, 1994.

The technique of bulk electrolysis involves the electrochemical oxidation of the metal complex under electrolysis conditions in the presence of a supporting electrolyte comprising a noncoordinating, inert anion. In the technique, solvents, supporting electrolytes and electrolytic potentials for the electrolysis are used such that electrolysis byproducts that would render the metal complex catalytically inactive are not substantially formed during the reaction. More particularly, suitable solvents are materials that are: liquids under the conditions of the electrolysis (generally temperatures from Q to 100°C), capable of dissolving the supporting electrolyte, and inert. "Inert solvents" are those that are not reduced or oxidized under the reaction conditions employed for the electrolysis. It is generally possible in view of the desired electrolysis reaction to choose a solvent and a supporting electrolyte that are unaffected by the electrical potential used for the desired electrolysis. Preferred solvents include difluorobenzene (all isomers), dimethoxyethane (DME), and mixtures thereof.

The electrolysis may be conducted in a standard electrolytic cell containing an anode and cathode (also referred to as the working electrode and counter electrode respectively). Suitable materials of construction for the cell are glass, plastic, ceramic and glass coated metal. The electrodes are prepared from inert conductive materials, by which are meant conductive materials that are unaffected by the reaction mixture or reaction conditions. Platinum or palladium are preferred inert conductive materials. Normally an ion permeable membrane such as a fine glass frit separates the cell into separate compartments, the working electrode compartment and counter electrode compartment. The working electrode is immersed in a reaction medium comprising the metal complex to be activated, solvent, supporting electrolyte, and any other materials desired for moderating the electrolysis or stabilizing the resulting complex. The counter electrode is immersed in a mixture of the solvent and supporting electrolyte. The desired voltage may be determined by theoretical calculations or experimentally by sweeping the cell using a reference electrode such as a silver electrode immersed in the cell electrolyte. The background cell current, the current draw in the absence of the desired electrolysis, is also determined. The electrolysis is completed when the current drops from the desired level to the background level. In this manner, complete conversion of the initial metal complex can be easily detected.

Suitable supporting electrolytes are salts comprising a cation and a compatible, noncoordinating anion, $A^-$. Preferred supporting electrolytes are salts corresponding to the formula $G^+A^-$; wherein:

$G^+$ is a cation which is nonreactive towards the starting and resulting complex, and
$A^-$ is as previously defined.

Examples of cations, $G^+$, include tetrahydrocarbyl substituted ammonium or phosphonium cations having up to 40 nonhydrogen atoms. Preferred cations are the tetra-n-butylammonium- and tetraethylammoniumcations.

During activation of the complexes of the present invention by bulk electrolysis the cation of the supporting electrolyte passes to the counter electrode and $A^-$ migrates to the working electrode to become the anion of the resulting oxidized product. Either the solvent or the cation of the supporting electrolyte is reduced at the counter electrode in equal molar quantity with the amount of oxidized metal complex formed at the working electrode. Preferred supporting electrolytes are tetrahydrocarbylammonium salts of tetrakis(perfluoroaryl) borates having from 1 to 10 carbons in each hydrocarbyl or perfluoroaryl group, especially tetra-n-butylammonium tetrakis(pentafluorophenyl) borate.

A further recently discovered electrochemical technique for generation of activating cocatalysts is the electrolysis of a disilane compound in the presence of a source of a noncoordinating compatible anion. This technique is more fully disclosed and claimed in the previously mentioned United States Patent application entitled, "Silylium Cationic Polymerization Activators For Metallocene Complexes", filed on September 12, 1994.

The foregoing activating techniques and ion forming cocatalysts are also preferably used in combination with a tri(hydrocarbyl)aluminum or tri(hydrocarbyl)borane compound having from 1 to 4 carbons in each hydrocarbyl group.

The molar ratio of catalyst/cocatalyst employed ranges from 1:10 to 1:1 with the exclusion of 1:1. In a particularly preferred embodiment of the invention the cocatalyst can be used in combination with a tri(hydrocarbyl)aluminum compound having from 1 to 10 carbons in each hydrocarbyl group. Mixtures of activating cocatalysts may also be employed. It is possible to employ these aluminum compounds for their beneficial ability to scavenge impurities such as oxygen, water, and aldehydes from the polymerization mixture. Preferred aluminum compounds include trialkyl aluminum compounds having from 1 to 6 carbons in each alkyl group, especially those wherein the alkyl groups are methyl, ethyl, propyl, isopropyl, n-butyl, isobutyl, pentyl, neopentyl or isopentyl. The molar ratio of metal complex to aluminum compound is preferably from 1:10,000 to 100:1, more preferably from 1:1000 to 10:1, most preferably from 1:500 to 1:1. A most preferred activating cocatalyst comprises a strong Lewis acid, especially tris(pentafluorophenyl) borane.

Upon activation of the metal complexes containing two distinct X groups, utilizing one of the preceding cation forming activating cocatalysts or activating techniques, there is believed to be formed, without wishing to be bound by such belief, a cationic metal complex corresponding to the formula:

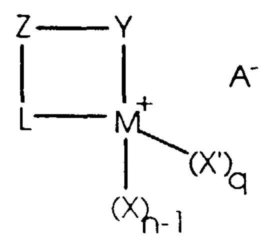

wherein:

M, L, Z, Y, X', X, n, and q are as previously defined, and

$A^-$ is as previously defined and is the noncoordinating anion from the activating cocatalyst or is formed concurrently by the activating technique.

Utilizing the preferred neutral Lewis acid activating cocatalyst, $B(C_6F_5)_3$ , $A^-$ of the foregoing cationic metal complexes is believed to correspond to the formula: $XB(C_6F_5)_3^-$,wherein X is as previously defined.

The preceding formula can be considered as a limiting, charge separated structure. However, it is to be understood that, particularly in solid form, the catalyst may not be fully charge separated. That is, the X group may retain a partial covalent bond to the metal atom, M.

It is further believed, without wishing to be bound by such belief, that Group 4 metal complexes in the +4 oxidation state wherein two X groups together with the metal M form a metallacycle, uniquely form novel zwitterionic complexes upon activation by combination with the previously mentioned neutral Lewis acid activating cocatalysts. Such zwitterionic metal complexes are believed correspond to the formula:

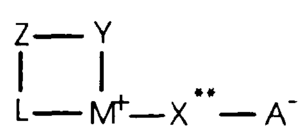

wherein:

M is a Group 4 metal in the +4 oxidation state;

L, Z, Y, are as previously defined;

X** is the divalent remnant formed by ring opening at one of the carbon to metal bonds of the metallacycle formed by M and two X groups taken together; and

$A^-$ is the moiety derived from a neutral Lewis acid activating cocatalyst . When M and two X groups taken together form a metallacyclopentene it is believed such zwitterionic complexes preferably correspond to one of the two equilibrium structures of the formula:

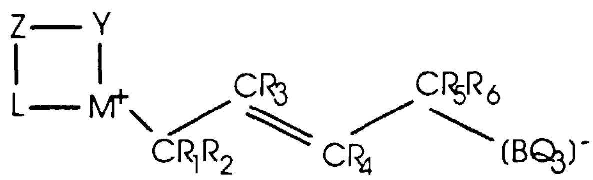

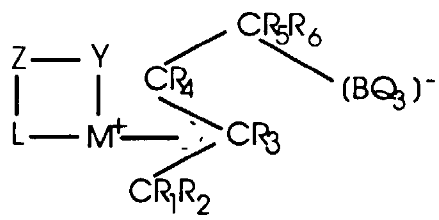

wherein:

M is titanium or zirconium;
L, Z, and Y are as previously defined;
$R_1$, $R_2$, $R_3$, $R_4$, $R_5$, and $R_6$ are independently each occurrence hydrogen or a hydrocarbyl or silyl group having from 1 to 20 nonhydrogen atoms;
B is boron in a valence state of 3, and
Q is as previously defined.

Other catalysts which are useful as the catalyst compositions of this invention, especially compounds containing other Group 4 metals, will, of course, be apparent to those skilled in the art.

<u>Description of a Continuous Polymerization</u>

The Polymerization Reaction

The polymerization reaction is conducted by contacting a gaseous stream of the monomers, in a gas phase process, such as in the fluid bed process described below, and substantially in the absence of catalyst poisons such as moisture, oxygen, CO and $CO_2$, with a catalytically effective amount of the activated catalyst composition at a temperature and pressure sufficient to initiate the polymerization reaction.

In order to achieve the desired density ranges in the polymers it is necessary to copolymerize enough of the comonomers with ethylene to achieve a level of up to 20 mol percent of the comonomer in the copolymer. The amount of comonomer needed to achieve this result will depend on the particular comonomer(s) employed.

Typically the various comonomers that are copolymerized with ethylene in order to provide polymers having the desired density range at any given melt index range from Q to 20 mol percent in the copolymer. The relative molar concentration of such comonomers to ethylene ($C_x/C_2$), which are present under reaction equilibrium conditions in the reactor will vary depending on the choice of comonomer and the desired copolymer density.

A fluidized bed reaction system which can be used in the practice of the process of the present invention is taught in U.S. Patent 4,543,399. A typical fluidized bed reactor can be described as follows:

The bed is usually made up of the same granular resin that is to be produced in the reactor. Thus, during the course of the polymerization, the bed comprises formed polymer particles, growing polymer particles, and catalyst particles fluidized by polymerization and modifying gaseous components pass upward through the bed at a flow rate or velocity sufficient to cause the particles to remain separated with the bed exhibiting fluid-like behavior. The fluidizing gas comprises the initial gaseous feed of monomers, make-up feed, and cycle (recycle) gas, i.e., comonomers, hydrogen and, if desired, an inert carrier gas. Examples of such inert carrier gases include nitrogen, methane, ethane or

propane, which are inert with respect to the polymerization reaction.

The essential parts of the reaction system are the polymerization reaction vessel, catalyst injection system, the fluidized bed, the gas distribution plate, inlet and outlet piping, a compressor, cycle gas cooler, and a product discharge system. In the vessel, there is a reaction zone which contains the bed and a velocity reduction zone which is above the reaction zone. Both are above the gas distribution plate. Advantages of the product of subject process are the homogeneity and uniformity of the physical properties throughout the resulting polymer and the high strength and touahness obtained without processing difficulty.

It will be apparent to the skilled artisan that use of a supported constrained geometry catalyst increases the range of reactor conditions that may be used before condensing components in the recycle stream. But if one chooses to condense components in the recycle stream, then it may be desirable in some instances to raise the dew point temperature of the recycle stream to further increase heat removal as taught in U.S. Patents 4,543,339 and 4,588,790. The recycle stream dew point temperature can be increased by: (1) raising the operating pressure of the reaction system; (2) increasing the concentrations of inert condensable compounds in the reaction system; and/or (3) reducing the concentration of inert non-condensable compounds in the reaction system. In one embodiment of this invention, the dew point temperature of the recycle stream may be increased by the addition of a condensable fluid to the recycle stream which is inert to the catalyst, reactants, and the products of the polymerization reaction. The fluid can be introduced into the recycle stream with the make-up fluid or by any other means or at any other point in the system. Examples of such fluids are saturated hydrocarbons, such as butanes, pentanes or hexanes.

A primary limitation on the extent to which the recycle gas stream can be cooled below the dew point is in the requirement the gas-to-liquid ratio be maintained at a level sufficient to keep the liquid phase of the two-phase recycle mixture in an entrained or suspended condition until the liquid is vaporized. It is also necessary for sufficient velocity of the upwardly flowing fluid stream in the reaction zone to maintain fluidization of the bed. This limitation can be overcome by collecting the condensed phase and introducing it to the fluidized bed separately from the recycled gaseous stream.

Multiple reactor polymerization processes are also useful in the present invention, such as those disclosed in U.S. Patents 3,914,342, 5,047,468, 5,126,398 and 5,149,738. The multiple reactors can be operated in series or in parallel, with at least one constrained geometry catalyst employed in at least one of the reactors. In this aspect of this invention resins are manufactured and blended in situ. Multiple reactor polymerization processes may be used to produce in-situ blended polymers with enhanced physical properties and/or processability. In-situ blends of different molecular weights and/or different densities may be produced for specific and desired physical and/or processability requirements. For example, two reactors can be used in series to produce resins with a bimodal molecular weight distribution. In another example, two reactors could produce resins with a bimodality in density or short chain branching. More than two reactors in series can be used to make more molecular weight or density components for in-situ blends. Each reactor separately can have a constrained geometry catalyst or a conventional Ziegler-Natta catalyst as needed for obtaining the in-situ blended polymer with the desired properties, as long as there is a constrained geometry catalyst in at least one reactor.

The constrained geometry catalysts may be used singularly, in combination with other constrained geometry catalysts, or in conjunction with Ziegler-type catalysts in separate reactors connected in parallel or in series. The Zeigler catalyst is generally a titanium based complex suitably prepared for use as a catalyst for the gas phase polymerization of olefins. This complex and methods for its preparation are disclosed in U.S. Patents 4,302,565, 4,302,566, 4,303,771, 4,395,359, 4,405,495, 4,481,301, and 4,562,169.

The polymerization in each reactor is conducted in the gas phase using a continuous fluidized bed process. A typical fluidized bed reactor is described in U.S. Pat. No. 4,482,687. As noted, the reactors may be connected in series as taught in U.S. Patents 5,047,468, 5,126,398, and 5,149,738. While two reactors are preferred, three or more reactors can be used to further vary the molecular weight distribution. As more reactors are added producing copolymers with different average molecular weight distributions, however, the sharp diversity of which two reactors are capable becomes less and less apparent. It is contemplated that these additional reactors could be used to produce copolymers with melt indices or densities, intermediate to the high and low melt indices previously referred to.

As noted previously, two or more reactors may be run in parallel with the resulting polymeric product being blended. This permits the reactors to be run independently, with different catalysts, different amounts of ethylene and alpha-olefins, different recycle rates and at different productivity rates. The various melt indices can be prepared in any order, i.e., in any reactor in the series. For example, the low melt index copolymer can be made in the first or second reactor in the series and the high melt index copolymer can be made in the first or second reactor as well. The actual conditions used will depend on the comonomer used and the desired copolymer properties and are readily ascertained by the skilled artisan.

The constrained geometry catalyst, the ethylene monomer, any comonomers and hydrogen, if any, are continuously fed into each reactor and ethylene copolymer and active catalyst are continuously removed from one reactor and introduced into the next reactor. The product is continuously removed from the last reactor in the series.

The alpha-olefins used in this aspect of the invention are the same as those that have been previously described in this application. Preferred alpha-olefins are 1 -butene, propylene, 1-hexene, 1-octene, 4-methyl-1-pentene and styrene.

Supported Homogeneous Catalysts

Supported homogeneous catalyst complexes such as those taught in WO-A-94/07928, can be used in the process taught by applicants.

The Catalyst Support

Typically, the support can be any of the known solid inorganic oxide catalyst supports, particularly porous supports. Preferably, the support material is an inorganic oxide in particulate form.

Suitable inorganic oxide materials which are desirably employed in accordance with this invention include Group 2, 3, 4, 13, or 14 metal oxides. The most preferred catalyst support materials include silica, alumina, and silica-alumina, and mixtures thereof. Other inorganic oxides that may be employed either alone or in combination with the silica, alumina, or silica-alumina are magnesia, titania, zirconia.

The specific particle size, surface area and pore volume of the inorganic oxide determine the amount of oxide that is desirable to employ in preparing the catalyst compositions, as well as affecting the properties of the polymer formed. These properties must frequently be taken into consideration in choosing an inorganic oxide for use in a particular aspect of the invention. In general, optimum results are usually obtained by the use of inorganic oxides having an average particle size in the range of 20 to 200 μm (microns), preferably 40 to 100 μm (microns), more preferably 50 to 80 μm (microns); a surface area of 50 to 1,000 square meters per gram, preferably 100 to 400 square meters per gram; and a pore volume of 0.5to 3.5 cc per gram; preferably 0.5 to 2 cc per gram.

The inorganic oxide support used in the preparation of the catalyst may be any particulate oxide or mixed oxide such that it is substantially free of adsorbed moisture or surface hydroxyl groups. If a support is employed that contains surface hydroxyl groups, a drying or dehydration treatment must be employed. Timing for the dehydration of the support is not critical, i.e., dehydration may occur immediately before use of the support or days before provided once the support is dehydrated, it is protected from moisture and impurities. Thermal treatment to dehydrate the support may be carried out in vacuum or while purging with a dry inert gas such as nitrogen at a temperature of 100°C to 1000°C, and preferably, above 300°C to 900°C, or more preferably 500°C to 850°C. Pressure considerations are not critical. The duration of the thermal treatment can be for a period of 1-100 hours, preferably 2-24 hours.

Chemical dehydration or chemical treatment to dehydrate the support may be accomplished by slurrying the inorganic particulate material, such as, for example, silica in an inert low boiling hydrocarbon, such as, for example, hexane. During the chemical dehydration reaction, the support, preferably silica, should be maintained in a moisture and oxygen-free atmosphere. To the silica slurry is then added a low boiling inert hydrocarbon solution of the chemical dehydrating agent. Useful chemical agents are for example, active silanes, such as trimethylchlorosilane or hexamethyldisilazane and alkyl metal compounds such as dibutylmagnesium, diethylzinc, trimethylaluminum, triethylaluminum, trimethylaluminum and triethylaluminum being particularly preferred. The ratio of millimoles of metal alkyl per gram of support may be between 0.1 to 100, a ratio of 1 to 10 being preferred. The chemical dehydration may be carried out at temperatures of -100°C to 300°C (preferably 0°C to 100°C) and contact times can range from 1 minute to 48 hours, preferably 15 minutes to 2 hours. The treated silica is filtered off and washed with an aromatic solvent, such as toluene or xylenes, to remove any activating amounts of possibly formed alumoxanes, then optionally washed with a light aliphatic hydrocarbon (pentanes or hexanes) before drying in vacuo or in dry stream of inert gas.

In order that persons skilled in the art may better understand the practice of supporting homogeneous catalysts for the practice of the present invention, the following examples are provided by way of illustration, and not by way of limitation. Additional information which may be useful in state of the art practice may be found in each of the references cited herein, which are incorporated by reference.

Experimental

All polymerizations, unless otherwise noted, were carried out under nitrogen pressures of $0.13 * 10^6$ - $0.55 * 10^6$ $N/m^2$ (20- 80 psi) in a 6 liter gas phase reactor having a 10 cm (four inch) diameter 75 cm (thirthy inch) long fludization zone and a 20 cm (eight inch) diameter 25 cm (ten inch) long velocity reduction zone which are connected by a transition section having tapered walls. Typical operating ranges are 40 to 100°C, 250 to 350 psia, and up to 8 hours reaction time. Ethylene, comonomer (if used), and hydrogen enter the bottom of the reactor where they pass through a gas distributor plate, The flow of the gas is 2 to 8 times the minimum particle fluidization velocity, Fluidization Engineering, 2nd Ed., D. Kunii and O. Levenspiel, 1991, Butterworth-Heinemann. Most of the suspended solids disengage in the velocity reduction zone. The reactant gases exit the top of the fluidization zone and pass through a dust filter to remove any fines. The gases then pass through a gas booster pump. The polymer is allowed to accumulate in the reactor over the course of the reaction. The total system pressure is kept constant during the reaction by regulating the flow of the ethylene into the reactor. Polymer is removed from the reactor to a recovery vessel by opening a valve located at the bottom of the fluidization zone. The polymer recovery vessel is kept at a lower pressure than the reactor. The pressures of ethylene, comonomer and hydrogen reported refer to partial pressures. The polyethylene powders used as supports were high density homopolymers. The titanium complex, $(C_5Me_4SiMe_2NCMe_3)TiMe_2$ is prepared according to U.S. Patent 5,189,192 and the borane complex, $B(C_6F_5)_3$ is prepared according to the procedure taught in Z. Naturforsch. 20b, 5-11 (1965).

Prior to being used as supports, the silicas were treated with the aluminum alkyl, triethylaluminum (TEA). The purpose of this pretreatment was to remove from the silica any residual water and/or hydroxyl groups. Following the pretreatment, the silicas were then washed several times with toluene to remove any residual TEA or alumoxane which may have resulted during the dehydration process. The supports were then dried under reduced pressure. In some cases the supports were washed with hexane before drying. Any amount of alumoxane which may have remained on the silica was present in a non-activating amount (see Examples 20 and 21).

Example 1 (Reference example)

Catalyst/support preparation

An aliquot (4 mL) of a 0.005 M solution (60 pmol) of $(C_5Me_4SiMe_2NCMe_3)TiMe_2$ in toluene and 4.8 mL of a 0.005 M solution (60 μmol) of $B(C_6F_5)_3$ in toluene were stirred with 0.640 g of high density polyethylene powder having zero melt index which previously had been sieved to remove any particles larger than 25 mesh. The solvent was removed to give a pale yellowish free-flowing powder. The resulting catalyst composition was divided into two portions, each weighing about 0.32 g.

Polymerization

One portion of the catalyst prepared above was added to the reactor which was under ethylene and hydrogen pressures of $1.9 * 10^6$ N/m$^2$) and $5.5 * 10^3$ N/m$^2$ 270 psi and 0.8 psi)(0.3 mol %), respectively, at a temperature of 57°C. A 2°C exotherm was observed. After 1 hour, the second portion of catalyst was added. A 9°C exotherm was observed. The yield of polymer having a 11.24 melt index was 26 g.

Example 2 (Reference Example)

Catalyst/support preparation

A polyethylene-supported catalyst was formed analogously to Example 1, except that 40 μmol each of the titanium complex and the borane complex and 0.600 g of polyethylene powder having zero melt index were used. The resulting catalyst composition was divided into two portions, each weighing about 0.30 g.

Polymerization

In a manner similar to Example 1, one portion of the catalyst prepared above was added to the reactor which was under ethylene and hydrogen pressures of $1.7 * 10^6$ N/m$^2$ and $3.8 * 10^3$ N/m$^2$ (250 psi and 0.55 psi)(0.22 mol %), respectively, at a temperature of 60°C. A 1°C exotherm was observed. After about one half hour, the second portion of catalyst was added. A 74°C exotherm was observed. The polymer was removed in two portions, 19 g of polymer powder having a melt index of 0.185, and 21.3 g of pieces of polymer having a melt index of 0.575 which had the appearance of having been melted.

Example 3 (Reference example)

Catalyst/support preparation

In a manner substantially the same as in Example 1, except that 2 mL (10 μmol) of the $(C_5Me_4SiMe_2NCMe_3)$ $TiMe_2$ solution and 2.4 mL (12 μmol) of the $B(C_6F_5)_3$ solution were combined with 0.600 g of 11.4 melt index polyethylene powder to prepare the supported catalyst. 0.30 g of the resulting supported catalyst (5 μmol titanium complex, 6 μmol borane complex) was used in the following polymerization.

Polymerization

The polymerization was carried out in two stages, similar to Example 2, except that the ethylene pressure was 2.6 * $10^6$ $N/m^2$ (300 psi). No hydrogen was present during the polymerization. The initial temperature was 61°C. The second portion of catalyst was added about 1 hour after the first portion of catalyst had been added. The yield of granular polymer having a melt index of zero was 25.4 g.

Example 4 (Reference Example)

Catalyst/support preparation

A polyethylene-supported catalyst was formed analogous to Example 3, except that 0.59 melt index polyethylene and 12 μmol of the borane complex were used.

Polymerization

The polymerization was carried out analogous to Example 3, except that the ethylene pressure was 2.5 * $10^6$ $N/m^2$ 290 psi. No hydrogen was present during the polymerization. The initial temperature was 66°C. An exotherm of 4°C was observed on addition of the first portion of catalyst. An exotherm of 24°C was observed on addition of the second portion of catalyst. The yield of granular polymer having a melt index of zero was 43.9 g.

Example 5 (Reference Example)

Catalyst/support preparation

An aliquiot (4 mL) of a 0.005 M solution (20 μmol) of $(C_5Me_4SiMe_2NCMe_3)TiMe_2$ in toluene and 4.8 mL of a 0.005 M solution (24 μmol) of $B(C_6F_5)_3$ in toluene were stirred with 0.600 g of 0.33 melt index high density polyethylene powder which previously had been sieved to remove any particles larger than 25 mesh. The solvent was removed to give a pale yellowish free-flowing powder.

Polymerization

An amount (0.30 g; 10 μmol titanium complex, 12 μmol borane complex) of the solid supported catalyst was introduced into a fluidized bed reactor pressurized to 1.8 * $10^6$ $N/m^2$ 260 psi ethylene containing 0.25 mol % (based on ethylene 4.4 * $10^3$ $N/m^2$ (0.65 psi)hydrogen at a temperature of 53°C. After a run time of 5 hours 81 g of polyethylene having a melt index of 1.30 was removed. The productivity was 169,000 g polymer/g Ti.

Example 6 (Reference Example)

Catalyst/support preparation

In a manner substantially the same as in Comparative Example 1, except that 2 mL (10 μmol) of the $(C_5Me_4SiMe_2NCMe_3)TiMe_2$ solution and 2.4 mL (12 μmol) of the $B(C_6F_5)_3$ solution were combined with 0.600 g of 0.33 melt index polyethylene powder to prepare the supported catalyst. 0.30 g of the resulting supported catalyst (5 μmol titanium complex, 6 μmol borane complex) was used in the following polymerization.

Polymerization

The polymerization was carried out as in Example 5, except that the ethylene and hydrogen pressures were 1.6 * $10^6$ $N/m^2$ and 3.2 * $10^3$ $N/m^2$ (230 psi and 0.46 psi) (0.20 mol %), respectively, at a temperature of 47°C. The yield of polymer having a melt index of 0.65 was 27.0 g.

Example 7 (Reference Example)

Polymerization

The polymerization was carried out as in Example 6, except that the ethylene and hydrogen pressures were 1.9 * $10^6$ $N/m^2$ and 9.6 * $10^3$ $N/m^2$ (280 psi and 1.4 psi) (0.50mol %), respectively, at a temperature of 55°C. The yield

of polymer having a melt index of 17.3 was 11.6 g.

Example 8

Catalyst/support preparation (Reference example)

2 mL of a 0.005 M solution (10 μmol) of $(C_5Me_4SiMe_2NCMe_3)TiMe_2$ and 2 mL of a 0.005 M solution (10 μmol) of $B(C_6F_5)_3$ were combined in a Fisher-Porter bottle with 0.501 g Davison 952 silica (dried at 900°C for 4 hours under an oxygen stream, then cooled under a stream of nitrogen) and 30 - 40 mL pentane. The container was pressurized with 41 * $10^3$ N/m$^2$ (6 psi) ethylene for 2 hours. The solvent was removed to give a dry prepolymer support. To 0.500 g of the supported polymer were added 4 mL of a 0.005 M solution (20 μmol) of $(C_5Me_4SiMe_2NCMe_3)TiMe_2$ and 4 mL of a 0.005 M solution (20 μmol) of $B(C_6F_5)_3$. The solvent was removed to give a dry powder.

Polymerization

Using the catalyst/support prepared above, the polymerization was carried out in a manner similar to Example 5, except that the ethylene and hydrogen pressures were 1.8 * $10^6$ N/m$^2$ and 2 * $10^3$ N/m$^2$ (270 psi and 0.3 psi)(0.30 mol %), respectively, at a temperature of 60°C. The yield of polymer having a melt index of 3.0 was 30.4 g.

Examples 9-19

A summary of Examples 9-19 is given in Table 1. Several different silicas were used as supports throughout these Examples: Davison types 952 and 951, Davison type 03, Calsicat type D and Shell type 980-H. Included in Table 1 are the individual run parameters (catalyst level, temperature, monomer particle pressures, silica type and silica pretreatment) along with the resulting polymer's density, $I_2$, $I_{10}/I_2$ and molecular weight distribution (MWD).

Support preparation

The silicas were pretreated prior to catalyst addition with triethylaluminum (TEA). The pretreatment procedure involved first adding 2.0 g of silica to 25 mL of toluene. The amount of TEA indicated in Table 1 was then added by syringe to the stirred silica slurry. Stirring was continued for at least 15 minutes. The solids were then filtered and washed several times with toluene to remove any residual TEA. The treated silica was then dried under vacuum.

Preparation of the supported catalyst

Appropriate amounts, as indicated in Table 1, of 0.005 M or of 0.010 M solutions of $B(C_6F_5)_3$ in toluene and of very pale yellow 0.005 M solutions of $(C_5Me_4SiMe_2NCMe_3)TiMe_2$ in hexane were added to 0.125 g of stirred silica to give bright yellow slurries. The solvents were then removed under vacuum from the stirred slurries to give the catalysts as free flowing powders.

General polymerization procedure

All amounts of support catalyst, titanium loading and borane, pressures of ethylene, 1-butene and hydrogen, reactor temperatures and run times and reaction yields are indicated in Table 1. The given amounts of the solid supported catalyst were introduced into the fluidized bed reactor pressured to 2.1 * $10^6$ N/m$^2$ (300 psi) (with nitrogen, ethylene, 1-butene and hydrogen, After the indicated run times, the polymers were removed from the reactor by venting the pressurized contents into a recovery vessel.

Example 20

Catalyst/support preparation

Davison 952 silica was pretreated as in Examples 9-19 under "Support preparation" using 0.5 mL of TEA and 2.0 g silica.

The catalyst was prepared as in Examples 9-19 under "Preparation of the Supported Catalyst" using 3 μmole of $(C_5Me_4SiMe_2NCMe_3)TiMe_2$, 9 μmole of $B(C_6F_5)_3$ and 0.10 g of the above treated silica.

Polymerization

The solid supported catalyst was introduced into the fluidized bed reactor pressurized with 1.65 * $10^6$ N/$m^2$ (240 psi) ethylene 62 * $10^3$ N/$m^2$ (9 psi) 1-butene, 8 * $10^3$ N/$m^2$ (1.2 psi) hydrogen and (51 psi) nitrogen. The initial temperature was 74C and the run time was 78 minutes. The yield of granular powder was 5.5 g.

Example 21 (comparative, example)

Catalyst/support preparation

Using the silica of Example 20, the silica-supported catalyst was prepared analogously to Example 20 except that none of the borane complex was added to the support.

Polymerization

The solid supported catalyst was introduced into the fluidized bed reactor pressurized with 1.65 * $10^6$ N/$m^2$ (240 psi) ethylene, 62 * $10^3$ N/$m^2$ (9 psi)1-butene, 8 * $10^3$ N/$m^2$ (1.2 psi) hydrogen and 350 * $10^3$ N/$m^2$ psi) nitrogen. The initial temperature was 75°C and the run time was 75 minutes. No polymer was recovered from the reactor, indicating that any aluminum compounds possibly remaining after washing the silica to remove residual TEA are only present at non-activating levels.

Example 22

Catalyst/support preparation

Preparation of the supported catalyst was analogous to Example 20 except that 12 µmole of $B(C_6F_5)_3$ and 4 µmole of $(C_5Me_4SiMe_2NCMe_3)TiMe_2$, were added to 0.20 g of the treated silica.

Polymerization

The solid supported catalyst was introduced into the fluidized bed reactor pressurized with 1.65 * $10^6$ N/$m^2$ (240 psi) ethylene,10 * $10^3$ N/$m^2$ (1.5 psi) 1,5-hexadiene,8 * $10^3$ N/$m^2$ (1.2 psi) hydrogen, and 412 * $10^3$ N/$m^2$ (60 psi) nitrogen. The initial temperature was 76°C and the run time was 126 minutes. 21 g of free flowing polymer powder were removed.

Example 23

Catalyst/support preparation

The supported catalyst was prepared analogously to Example 22.

Polymerization

The solid supported catalyst was introduced into the fluidized bed reactor pressurized with 1.65 * $10^6$ N/$m^2$ (240 psi) ethylene,5.0 * $10^3$ N/$m^2$ (0.75 psi) 1.5-hexadiene, 8 * $10^3$ N/$m^2$ (1.2 psi) hydrogen, and 412 * $10^3$ N/$m^2$ (60 psi) nitrogen. The initial temperature was 80°C and the run time was 187 minutes. 11.6 g of free flowing polymer powder were removed.

Example 24

Catalyst/support preparation

Preparation of the supported catalyst was analogous to Example 20 except that 9 µmole of $B(C_6F_5)_3$, 3 µmole of $(C_5Me_4SiMe_2NCMe_3)TiMe_2$, and 0.10 g of the treated silica were used.

Polymerization

The solid supported catalyst was introduced into the fluidized bed reactor pressurized with .65 *$10^6$ N/$m^2$(240

psi) ethylene,5 * $10^3$ N/$m^2$ (6 psi)1-butene 41 * $10^3$ N/$m^2$ (0.75 psi) 1,7-octadiene,8* $10^3$ N/$m^2$ (1.2 psi) hydrogen, and 412 * $10^3$ N/$m^2$ (60 psi)nitrogen. The initial temperature was 80°C and the run time was 74 minutes. 14.4 g of free flowing polymer powder were removed.

Example 25

Catalyst/support preparation

The supported catalyst was prepared analogously to Example 24.

Polymerization

The solid supported catalyst was introduces into the fluidized bed reactor pressurized with 1.65 * $10^6$ N/$m^2$ (240 psi) ethylene, 41 * $10^3$ N/$m^2$ (6 psi) 1-butene, 2.5 * $10^3$ N/$m^2$ (0.38 psi) 1.7-octadiene, 8 * $10^3$ N/$m^2$ (1.2 psi) hydrogen, and 412 * $10^3$ N/$m^2$ (60 psi) nitrogen. The initial temperature was 70°C and the run time was 99 minutes. 12.1 g of free flowing polymer powder were removed.

TABLE 1

Summary of gas phase polymerisation results

| Example No. | µmoles Ti | µmoles borane | partial pres. (psi) $C_2H_4$* | partial pres. (psi) $C_2H_8$** | partial pres. (psi) $H_2$*** | silica+ | ml-NTEA◊ /g silica | temp (°C) | yield (g) | time (min) | density (g/cc) | $I_2$ | MWD | $I_{10}/I_2$ |
|---|---|---|---|---|---|---|---|---|---|---|---|---|---|---|
| 9 | 1 | 3 | (240) $1.65x10^6$ N/m$^2$ | (6) $41x10^3$ N/m$^2$ | (1.2) $8x10^3$ N/m$^2$ | D952 | 0.25 | 71 | 6.3 | 93 | 0.9283 | 1.9 | 2.56 | 7.4 |
| 10 | 2 | 6 | (240) $1.65x10^6$ N/m$^2$ | (6) $41x10^3$ N/m$^2$ | (1.2) $8x10^3$ N/m$^2$ | D952 | 0.25 | 70 | 25.7 | 67 | 0.9203 | 1.5 | 2.49 | 7.3 |
| 11 | 2 | 6 | (240) $1.65x10^6$ N/m$^2$ | (6) $41x10^3$ N/m$^2$ | (1.2) $8x10^3$ N/m$^2$ | D952 | 0.25 | 65 | 7.9 | 68 | 0.9232 | 1.8 | 2.43 | 7.7 |
| 12 | 2 | 6 | (240) $1.65x10^6$ N/m$^2$ | (6) $41x10^3$ N/m$^2$ | (1.2) $8x10^3$ N/m$^2$ | D952 | 0.50 | 69 | 23.9 | 98 | 0.9179 | 1.4 | 2.55 | 7.7 |
| 13 | 2 | 6 | (240) $1.65x10^6$ N/m$^2$ | (12) $82x10^3$ N/m$^2$ | (1.2) $8x10^3$ N/m$^2$ | D952 | 0.25 | 68 | 38.9 | 53 | 0.9070 | 0.4 | 2.33 | 8.7 |
| 14 | 1 | 3 | (240) $1.65x10^6$ N/m$^2$ | (12) $82x10^3$ N/m$^2$ | (1.2) $8x10^3$ N/m$^2$ | D03 | 0.50 | 69 | 27.2 | 69 | 0.8979 | 0.2 | 1.98 | 10.9 |
| 15 | 1 | 3 | (240) $1.65x10^6$ N/m$^2$ | (6) $41x10^3$ N/m$^2$ | (1.2) $8x10^3$ N/m$^2$ | D03 | 0.50 | 69 | 24.8 | 16 | 0.9078 | 0.4 | 2.23 | 9.3 |
| 16 | 2 | 6 | (240) $1.65x10^6$ N/m$^2$ | (6) $41x10^3$ N/m$^2$ | (1.4) $10x10^3$ N/m$^2$ | D951 | 0.25 | 73 | 5.1 | 61 | 0.9276 | 2.3 | 2.52 | 8.0 |
| 17 | 2 | 6 | (240) $1.65x10^6$ N/m$^2$ | (6) $41x10^3$ N/m$^2$ | (1.4) $10x10^3$ N/m$^2$ | Sh980 | 0.25 | 67 | 11.7 | 77 | 0.9283 | 2.5 | 2.45 | 8.0 |
| 18 | 2 | 6 | (240) $1.65x10^6$ N/m$^2$ | (6) $41x10^3$ N/m$^2$ | (1.4) $10x10^3$ N/m$^2$ | Sh980 | 0.25 | 71 | 15.4 | 102 | 0.9243 | 2.4 | 2.49 | 7.8 |
| 19 | 1 | 3 | (240) $1.65x10^6$ N/m$^2$ | (6) $41x10^3$ N/m$^2$ | (1.2) $8x10^3$ N/m$^2$ | Cal D | 0.25 | 68 | 5.4 | 92 | 0.9233 | 1.4 | 2.55 | 7.9 |

* $C_2H_4$ refers to ethylene partial pressure

** $C_2H_4$ refers to 1-butene partial pressure

*** $H_2$ refers to hydrogen partial pressure

\+ silica: D952, D03 and D951 refer to Davison silica types 952, 03 and 951 respectively; Sh980h refers to Sheel silica type 980-H; Cal D refers to Calsicat silica type D.

◊ NTEA refers to neat trithylaluminum.

The MWDs of the polymers from Examples 9-19 as shown in Table 1, were relatively narrow ranging in value from 1.98 to 2.56, in contrast to the work of Canich et al in U.S. Patent 5,057,475 where reported MWDs ranged from 2.67 to 5.00. Table 1 shows that ethylene or ethylene/$\alpha$-olefin polymers can be made where the $I_{10}/I_2$ increases without increasing MWD.

## Claims

1. A fluidized bed gas phase process for the production of an ethylene polymer, the process comprising reacting by contacting under polymerization conditions ethylene or ethylene and at least one of a copolymerizable alpha-olefin or diolefin in the presence of a supported homogeneous catalyst characterized by an absence of an activating amount of alumoxane comprising:

    **A)** *1.* a metal complex corresponding to the formula:

    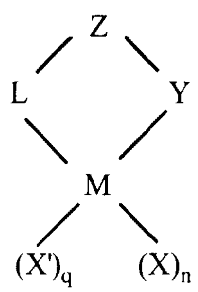

    or dimers thereof,
    wherein:

    M is a Group 4 metal in the +3 or +4 formal oxidation state;
    L is a group containing a cyclic, delocalized, aromatic, anionic, $\pi$ system comprising a cyclopentadienyl, indenyl, fluorenyl, tetrahydroindenyl, tetrahydrofluorenyl, or octahydrofluorenyl group, or an inertly substituted derivative thereof through which the L group is bound to M, and which L group is also bound to Z, said L group containing up to 60 nonhydrogen atoms;
    Z is a moiety covalently bound to both L and Y, comprising boron, or a member of Group 14 of the Periodic Table of the Elements, said moiety having up to 60 nonhydrogen atoms;
    Y is a moiety comprising nitrogen, phosphorus, sulfur or oxygen through which Y is covalently bound to both Z and M, said moiety having up to 25 nonhydrogen atoms;
    X' independently each occurrence is Lewis base containing up to 40 nonhydrogen atoms;
    X independently each occurrence is a monovalent anionic moiety having up to 20 nonhydrogen atoms, provided however that neither X is an aromatic group that is $\pi$-bonded to M, optionally, two X groups may be covalently bound together forming a divalent dianionic moiety having both valences bound to M, or further optionally one or more X and one X' group may be bonded together thereby forming a moiety that is both covalently bound to M and coordinated thereto by means of Lewis base functionality;
    q is a number from 0 to 1; and
    n is 1 or 2 depending on the formal oxidation state of M; and either

    **B)** *1.* an activating cocatalyst selected from the group consisting of neutral Lewis acids other than an alumoxane, and nonpolymeric, compatible noncoordinating ion forming compounds, wherein the molar ratio of metalcomplex/cocatalyst employed ranges from 1:10 to 1:1 with the exclusion of 1:1; or
    **B)** *2.* electrochemically oxidizing the complex of the above formula to an active catalyst using electrolysis conditions in the presence of a supporting electrolyte comprising a noncoordinating inert anion; and
    **C)** an inorganic oxide support chemically dehydrated with a chemical dehydrating agent, the inorganic support being substantially free of adsorbed moisture and surface hydroxyl groups.

2. The process according to claim 1 wherein M is titanium and X each occurrence is a monovalent ligand group of up to 20 nonhydrogen atoms.

3. The process according to claim 2 wherein X is a $C_{1-20}$ hydrocarbyl group or 2X taken together are a hydrocarbadiyl group.

4. The process according to claim 1 wherein the ethylene polymer contains ≥ 80 mol percent of ethylene and ≤ 20 mol percent of one or more alpha-olefin or diolefin comonomers, wherein the ethylene polymer is substituted, on average, with 0.01 to 3 branches, which have a chain length of at least one carbon less than the number of carbons in said comonomers, per 1000 total carbons.

5. The process according to claim 1 wherein the support is silica, alumina or a mixture thereof.

6. The process according to claim 1 wherein Y is -O-, -S-, -NR* -, -PR*-, and R* is independently a hydrocarbyl or silyl group having up to 12 nonhydrogen atoms.

7. The process according to claim 1 wherein the resulting ethylene polymer has a density of 0.85 to 0.96 g/cm$^3$ and a melt index of less than 100 g/10 min. measured in accordance with ASTM D-1238 (190°C/2.16 kg).

8. The process according to claim 1 wherein the gas phase fluid bed reaction is carried out at a pressure less than 70 kg/cm$^2$ (1000 psi) and at a temperature of from about 0 to 110°C.

9. The process according to claim 1 wherein the activating cocatalyst is a tris(pentafluorophenyl)borane.

10. The process according to claim 2 wherein X is methyl or benzyl.

11. The process according to claim 1 wherein said process is conducted in at least two fluidized bed gas phase reactors connected in series or in parallel.

12. The process according to claim 1 wherein said process is conducted in at least two fluidized bed gas phase reactors connected in series.

13. The process of claim 11 wherein the catalyst system in one reactor further comprises a supported Ziegler catalyst.

14. The process of claim 5 in which the support is pretreated.

15. The process of claim wherein the catalyst comprises;

**A)** ***1.*** a metal complex corresponding to the formula:

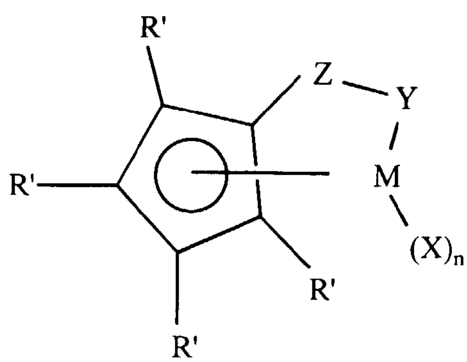

(1)

wherein:

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
Y is -O-, -S-, -NR*-, -PR*-;
Z is $SiR^*_2$,$CR^*_2$, $SiR^*_2SiR^*_2$, $CR^*_2CR^*_2$,$CR^*=CR^*$, $CR^*_2SiR^*_2$ or $GeR^*_2$; wherein:

R* each occurrence is independently hydrogen, or a member selected from hydrocarbyl, silyl, halogenated aryl, and combinations thereof, said R* having up to 20 nonhydrogen atoms, and optionally, two R* groups from Z (when R* is not hydrogen), or an R* group from Y form a ring system.
M is titanium or zirconium in the +3 or +4 formal oxidation state; and
X is chloro, hydrocarbyl, hydrocarbyloxy, silyl or N,N-dialkylamino substituted hydrocarbyl group;
n is 1 or 2 and

**A)*2.*** an activating cocatalyst selected from the group consisting of (i) C1-$C_{30}$ hydrocarbyl substituted boranes and halogenated derivatives thereof, and (ii) borates of the general formula

$$[L^*\text{-}H] * [BQ_4]^-$$

wherein:

L* is neutral Lewis base,
[L*-H]* is a Bronsted acid,
B is boron in a valence state of 3; and
Q is a hydrocarbyl-, hydrocarbyloxy- fluorinated hydrocarbyl-, or fluorinated silylhydrocarbyl-group of up to 20 nonhydrogen atoms, with the proviso that in not more than one occasion is Q hydrocarbyl.

**16.** The process according to claim 15 wherein M is titanium.

**17.** The process according to claim 16 wherein X is a $C_{1-20}$ hydrocarbyl group.

**18.** The process according to claim 15 wherein the ethylene polymer contains ≥ 80 mol percent of ethylene and ≤ 20 mol percent of one or more alpha-olefin or diolefin comonomers.

**19.** The process of claim 14 in which the support is pretreated with triethylaluminum.

**20.** The process according to claim 15 in which the support is silica, alumina, or a mixture thereof.

**21.** The process according to claim 20 in which the support is pretreated.

**22.** The process according to claim 21 in which the support is pretreated with triethylaluminum.

**23.** The process of claim or 15, in which the support is thermally dehydrated at a temperature between 100-1000°C for a period of 1-100 hours.

**Patentansprüche**

**1.** Wirbelbett-Gasphasenverfahren für die Herstellung eines Ethylenpolymeren, wobei das Verfahren die Umsetzung durch Inkontaktbringen unter Polymerisationsbedingungen von Ethylen oder Ethylen und wenigstens einem copolymerisierbaren α-Olefin oder Diolefin in Anwesenheit eines getragenen homogenen Katalysators umfaßt, gekennzeichnet durch die Abwesenheit einer aktivierenden Menge von Alumoxan, umfassend:

A)1. einen Metallkomplex, welcher der Formel entspricht:

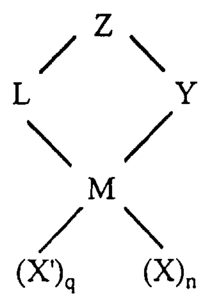

oder Dimere hiervon,
worin:

M ein Metall der Gruppe 4 im formalen Oxidationszustand +3 oder + 4 ist,
L eine Gruppe ist, die ein cyclisches delokalisiertes aromatisches anionisches π-System, umfassend eine Cyclopentadienyl-, Indenyl-, Fluorenyl-, Tetrahydroindenyl-, Tetrahydro-fluorenyl- oder Octahydrofluorenylgruppe oder ein inert substituiertes Derivat hiervon, enthält, durch welches die L-Gruppe an M gebunden ist, und wobei diese L-Gruppe ebenfalls an Z gebunden ist und diese L-Gruppe bis zu 60 Nicht-Wasserstoffatome enthält,
Z eine kovalent an sowohl L als auch Y gebundene Einheit ist, die Bor oder ein Glied der Gruppe 14 des Periodensystems der Elemente umfaßt, wobei diese Einheit bis zu 60 Nicht-Wasserstoffatome hat,
Y eine Einheit ist, die Stickstoff, Phosphor, Schwefel oder Sauerstoff umfaßt, durch welche Y kovalent an sowohl Z als auch M gebunden ist, wobei diese Einheit bis zu 25 Nicht-Wasserstoffatome hat,
X' unabhängig bei jedem Vorkommen eine Lewis-Base, die bis zu 40 Nicht-Wasserstoffatome enthält, ist,
X unabhängig bei jedem Vorkommen eine einwertige anionische Einheit ist, die bis zu 20 Nicht-Wasserstoffatome enthält, vorausgesetzt jedoch, daß kein X eine aromatische Gruppe ist, die an M π-gebunden ist, wahlweise keine zwei X-Gruppen aneinander unter Bildung einer zweiwertigen dianionischen Einheit, die beide Wertigkeiten an M gebunden hat, kovalent gebunden sein können oder weiter wahlweise ein oder mehrere X und eine Gruppe X' aneinander unter Bildung einer Einheit, die sowohl an M kovalent gebunden ist als auch hieran mittels einer Lewis-Basen-Funktionalität koordiniert ist, nicht gebunden sein können,
q eine Zahl von 0 bis 1 ist,
n = 1 oder 2 ist, abhängig von dem formalen Oxidationszustand von M, und entweder:

B)1. einen aktivierenden Kokatalysator, ausgewählt aus der Gruppe, die aus neutralen Lewis-Säuren, anders als einem Alumoxan, und nichtpolymeren verträglichen nicht-koordinier-enden ionenbildenden Verbindungen besteht, worin das Molverhältnis von Metallkomplex/eingesetztem Kokatalysator von 1:10 bis 1:1 unter Ausschluß von 1:1 reicht, oder
B)2. elektrochemisches Oxidieren des Komplexes der oben angegebenen Formel zu einem aktiven Katalysator unter Anwendung von Elektrolysebedingungen in der Anwesenheit eines tragenden Elektrolyten, der ein nicht-koordinierendes inertes Anion umfaßt, und
C) einen anorganischen Oxidträger, der chemisch mit einem chemischen Dehydratisierungsmittel dehydratisiert ist, wobei der anorganische Träger im wesentlichen frei von adsorbierter Feuchtigkeit und Oberflächen-Hydroxylgruppen ist.

**2.** Verfahren nach Anspruch 1, worin M = Titan ist und X bei jedem Vorkommen eine einwertige Ligandengruppe mit bis zu 20 Nicht-Wasserstoffatomen ist.

**3.** Verfahren nach Anspruch 2, worin X eine $C_{1-20}$-Hydro-carbylgruppe ist oder zwei X zusammen eine Hydrocarbadiyl-gruppe sind.

**4.** Verfahren nach Anspruch 1, worin das Ethylenpolymere ≥ 80 Mol-% Ethylen und ≤ 20 Mol-% von einem oder mehreren α-Olefin- oder Diolefincomonomeren enthält, worin das Ethylenpolymere im Durchschnitt mit 0,01 bis 3 Verzweigungen, die eine Kettenlänge von wenigstens einem Kohlenstoff weniger der Anzahl von Kohlenstoffen in diesen Comonomeren haben, pro 1000 Gesamtkohlenstoffen substituiert ist.

5. Verfahren nach Anspruch 1, worin der Träger Siliziumdioxid, Aluminiumoxid oder ein Mischung hiervon ist.

6. Verfahren nach Anspruch 1, worin Y = -O-, -S-, -NR*-, -PR*- ist und R* unabhängig eine Hydrocarbyl- oder Silylgruppe, die bis zu 12 Nicht-Wasserstoffatomen hat, ist.

7. Verfahren nach Anspruch 1, worin das resultierende Ethylenpolymere eine Dichte von 0,85 bis 0,96 $g/cm^3$ und einen Schmelzindex von weniger als 100g/min, gemessen entsprechend ASTM D-1238 (190°C/2,16 kg) , hat.

8. Verfahren nach Anspruch 1, worin die Gasphasen-Wirbel-bettreaktion bei einem Druck von weniger als 70 $kg/cm^2$ (1000 psi) und bei einer Temperatur von etwa 0 bis 110°C durchgeführt wird.

9. Verfahren nach Anspruch 1, worin der aktivierende Kokatalysator ein Tris-(pentafluorphenyl)-boran ist.

10. Verfahren nach Anspruch 2, worin X = Methyl oder Benzyl ist.

11. Verfahren nach Anspruch 1, worin dieses Verfahren in wenigstens zwei Wirbelbett-Gasphasenreaktoren, die in Reihe oder parallel geschaltet sind, durchgeführt wird.

12. Verfahren nach Anspruch 1, worin dieses Verfahren in wenigstens zwei Wirbelbett-Gasphasenreaktoren, die in Reihe geschaltet sind, durchgeführt wird.

13. Verfahren nach Anspruch 11, worin das Katalysatorsystem in einem Reaktor weiter einen getragenen Ziegler-Katalysator umfaßt.

14. Verfahren nach Anspruch 5, in welchem der Träger vorbehandelt ist.

15. Verfahren nach Anspruch 1, worin der Katalysator umfaßt:

A)1. einen Metallkomplex, welcher der Formel entspricht:

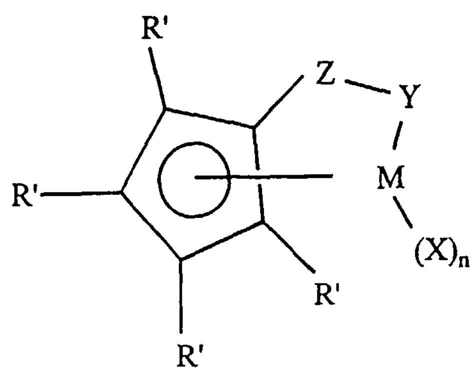

(1)

worin:

R' bei jedem Vorkommen unabhängig ausgewählt ist aus Wasserstoff, Hydrocarbyl, Silyl, Germyl, Halogen, Cyano und Kombinationen hiervon, wobei dieses R' bis zu 20 Nicht-Wasserstoffatome hat und wahlweise zwei Gruppen R' (worin R' nicht Wasserstoff, Halogen oder Cyano ist) zusammen ein zweiwertiges Derivat hiervon bilden, das an benachbarte Stellungen des Cyclopentadienylrings unter Bildung einer anellierten Ringstruktur gebunden ist,
Y = -O-, -S-, -NR*-, -PR*- ist,
Z = $SiR^*_2$, $CR^*_2$, $SiR^*_2SiR^*_2$, $CR^*_2C^*_2$, $CR^*=CR^*$, $CR^*_2SiR^*_2$ oder $GeR^*_2$ ist, worin
R* bei jedem Vorkommen unabhängig Wasserstoff oder ein Glied, ausgewählt aus Hydrocarbyl, Silyl, halogeniertem Aryl und Kombinationen hiervon, ist, wobei R* bis zu 20 Nicht-Wasserstoffatome hat, und wahlweise zwei Gruppen R* von Z (falls R* nicht Wasserstoff ist) oder eine Gruppe R* von Y ein Ringsystem bilden,
M = Titan oder Zirkonium im formalen Oxidationszustand +3 oder +4 ist,

X = Chlor, Hydrocarbyl, Hydrocarbyloxy, Silyl oder N,N-dialkylamino-substituierte Hydrocarbylgruppe ist,
n = 1 oder 2 ist, und

A)2. einen aktivierenden Kokatalysator, ausgewählt aus der Gruppe, bestehend aus (i) $C_1$-$C_{30}$-hydrocarbyl-substituierten Boranen und halogenierten Derivaten hiervon und (ii) Boraten der allgemeinen Formel

$$[L^*\text{-}H]\ ^*\ [BQ_4]^-$$

worin:

L* neutrale Lewis-Base ist,
[L*-H]* eine Bronsted-Säure ist,
B = Bor in einem Wertigkeitszustand von 3 ist, und
Q eine Hydrocarbyl-, Hydrocarbyloxy-, fluorierte Hydrocarbyl- oder fluorierte Silylhydrocarbylgruppe mit bis zu 20 Nicht-Wasserstoffatomen ist, mit der Maßgabe, daß bei nicht mehr als einem Vorkommen Q = Hydrocarbyl ist.

**16.** Verfahren nach Anspruch 15, worin M = Titan ist.

**17.** Verfahren nach Anspruch 16, worin X eine $C_{1\text{-}20}$-Hydro-carbylgruppe ist.

**18.** Verfahren nach Anspruch 15, worin das Ethylenpolymere ≥ 80 Mol-% Ethylen und ≤ 20 Mol-% von einem oder mehreren α-Olefin- oder Diolefincomonomeren enthält.

**19.** Verfahren nach Anspruch 14, worin der Träger mit Triethylaluminium vorbehandelt ist.

**20.** Verfahren nach Anspruch 15, in welchem der Träger Siliziumdioxid, Aluminiumoxid oder eine Mischung hiervon ist.

**21.** Verfahren nach Anspruch 20, in welchem der Träger vorbehandelt ist.

**22.** Verfahren nach Anspruch 21, in welchem der Träger mit Triethylaluminium vorbehandelt ist.

**23.** Verfahren nach Anspruch 1 oder 15, in welchem der Träger thermisch bei einer Temperatur zwischen 100 - 1000°C für eine Zeitspanne von 1 - 100 Stunden dehydratisiert ist.

## Revendications

**1.** Procédé en phase gazeuse, à lit fluidisé, pour la production d'un polymère d'éthylène, qui comprend la réaction, par mise en contact dans des conditions de polymérisation, de l'éthylène ou de l'éthylène et d'au moins une alpha-oléfine ou dioléfine copolymérisable, avec un catalyseur homogène, fixé sur un support, caractérisé par l'absence d'une quantité activante d'aluminoxane et comprenant :

*A)1.* un complexe métallique répondant à la formule :

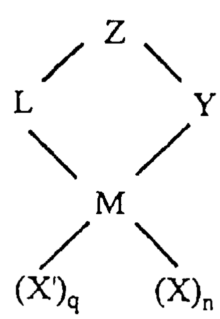

ou des dimères de ce complexe,
formule dans laquelle :

- M désigne un métal du groupe 4, à l'état d'oxydation formel +3 ou +4,
- L représente un groupe contenant un système Π cyclique, délocalisé, aromatique, anionique, comprenant un groupe cyclopentadiényle, indényle, fluorényle, tétrahydroindényle, tétrahydrofluorényle ou octa-hydrofluorényle, ou un dérivé à substituant inerte d'un tel groupe, par lequel le groupe L est lié à M, ledit groupe L étant également lié à Z et contenant jusqu'à 60 atomes qui ne sont pas des atomes d'hydrogène,
- Z désigne un fragment lié de manière covalente à la fois à L et à Y, comprenant du bore ou un élément du groupe 14 du Tableau Périodique des Eléments, ledit fragment ayant jusqu'à 60 atomes qui ne sont pas des atomes d'hydrogène,
- Y représente un fragment contenant de l'azote, du phosphore, du soufre ou de l'oxygène,par lequel Y est lié de manière covalente à la fois à Z et à M, ledit fragment ayant jusqu'à 25 atomes qui ne sont pas des atomes d'hydrogène,
- chaque X' représente indépendamment une base de Lewis contenant jusqu'à 40 atomes qui ne sont pas des atomes d'hydrogène,
- chaque X représente indépendamment un fragment anionique monovalent, ayant jusqu'à 20 atomes qui ne sont pas des atomes d'hydrogène, étant entendu toutefois que aucun X n'est un groupe aromatique lié à M par Π , éventuellement deux groupes X peuvent être reliés ensemble de manière covalente pour former un fragment dianionique divalent ayant ses deux valences liées à M, ou encore éventuellement un ou plusieurs X et un groupe X' peuvent être reliés ensemble pour former un fragment qui est à la fois lié de manière covalente à M et lié par coordination à M au moyen de la fonction de base de Lewis,
- q désigne un nombre ayant une valeur de 0 à 1, et
- n est égal à 1 ou 2, suivant l'état d'oxydation formel de M, et soit

*B)1.* un cocatalyseur activant choisi parmi les acides de Lewis neutres, autres que les aluminoxanes, et les composés non polymères, formant un ion non-coordinant, compatibles, le rapport molaire complexe métallique/cocatalyseur utilisé étant compris dans l'intervalle allant de 1:10 à 1:1, la valeur limite 1:1 étant exclue, soit
*B)2.* l'oxydation électrochimique du complexe de formule précédente en un catalyseur actif, dans des conditions d'électrolyse, en présence d'un électrolyte support contenant un anion inerte non-coordinant, et
*C)* un support en oxyde minéral, déshydraté chimiquement par un agent de déshydratation chimique, le support minéral étant pratiquement exempt d'humidité adsorbée et de groupes hydroxyles en surface.

**2.** Procédé selon la revendication 1, dans lequel M représente le titane et chaque X représente un groupe coordinat monovalent, ayant jusqu'à 20 atomes qui ne sont pas des atomes d'hydrogène.

**3.** Procédé selon la revendication 2, dans lequel X représente un groupe hydrocarbyle en $C_1$ à $C_{20}$, ou bien deux X pris ensemble représentent un groupe hydrocarbadiyle.

**4.** Procédé selon la revendication 1, dans lequel le polymère d'éthylène contient au moins 80 % en moles d'éthylène et au plus 20 % en moles d'un ou plusieurs comonomères alpha-oléfine ou dioléfine, et le polymère d'éthylène est substitué en moyenne par 0,01 à 3 ramifications ayant une longueur de chaîne inférieure d'au moins un atome de carbone au nombre d'atomes de carbone desdits comonomères, pour 1000 atomes de carbone au total.

**5.** Procédé selon la revendication 1, dans lequel le support est de la silice, de l'alumine ou un mélange des deux.

**6.** Procédé selon la revendication 1, dans lequel Y représente -O-, -S-, -NR*- ou -PR*-, R* désignant un groupe hydrocarbyle ou silyle ayant jusqu'à 12 atomes qui ne sont pas des atomes d'hydrogène.

**7.** Procédé selon la revendication 1, dans lequel le polymère d'éthylène résultant a une masse volumique de 0,85 à 0,96 g/$cm^3$ et un indice de fluidité à l'état fondu inférieur à 100 g/10 minutes, cet indice étant mesuré selon la norme ASTM D-1248 (190°C/2,16 kg).

**8.** Procédé selon la revendication 1, dans lequel la réaction en phase gazeuse, sur lit fluidisé, est effectuée à une pression inférieure à 70 kg/$cm^3$ (1000 psi) et à une température comprise dans l'intervalle allant d'environ 0°C à environ 110°C.

**9.** Procédé selon la revendication 1, dans lequel le cocatalyseur activant est le tris(pentafluorophényl)borane.

**10.** Procédé selon la revendication 2, dans lequel X représente un groupe méthyle ou benzyle.

**11.** Procédé selon la revendication 1, dans lequel on réalise ladite réaction dans au moins deux réacteurs en phase gazeuse, à lit fluidisé, montés en série ou en parallèle.

**12.** Procédé selon la revendication 1, dans lequel on réalise ladite réaction dans au moins deux réacteurs en phase gazeuse, à lit fluidisé, montés en série.

**13.** Procédé selon la revendication 11, dans lequel le système catalytique d'un réacteur comprend en outre un catalyseur Ziegler, fixé sur un support.

**14.** Procédé selon la revendication 5, dans lequel le support est prétraité.

**15.** Procédé selon la revendication 1, dans lequel le catalyseur comprend :

*A)1.* un complexe métallique répondant à la formule :

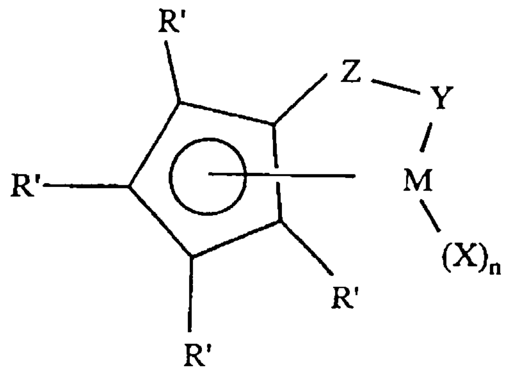

(1)

dans laquelle :
chaque R' est choisi indépendamment parmi l'atome d'hydrogène, les atomes d'halogène, les groupes hydrocarbyles, les groupes silyles, les groupes germyles, le groupe cyano et leurs combinaisons, ledit R' ayant jusqu'à 20 atomes qui ne sont pas des atomes d'hydrogène, et éventuellement deux groupes R' (lorsque R' ne représente pas un atome d'hydrogène, un atome d'halogène ou un groupe cyano) pouvant former ensemble un fragment divalent, relié à des positions adjacentes du noyau cyclopentadiényle, pour former une structure à noyaux condensés,

Y représente -O-, -S-, -NR*-, ou -PR*-,
Z représente $SiR^*_2$, $CR^*_2$, $SiR^*_2SiR^*_2$, $CR^*_2CR^*_2$, CR*=CR*, $CR^*{}_2SiR^*_2$ ou $GeR^*_2$, R* désignant indépendamment à chaque occurrence un atome d'hydrogène ou un groupe choisi parmi les groupes hydrocarbyles, les groupes silyles, les groupes aryles halogénés et leurs combinaisons, ledit R* ayant jusqu'à 20 atomes qui ne sont pas des atomes d'hydrogène, et éventuellement deux groupes R* de Z (lorsque R* n'est pas un atome d'hydrogène) ou un groupe R* de Y formant un système cyclique,
M représente le titane ou le zirconium à l'état d'oxydation formel +3 ou +4,
X représente un atome de chlore ou un groupe hydrocarbyle, hydrocarbyloxy, silyle ou hydrocarbyle substitué par un groupe N,N-dialkylamino,
n est égal à 1 ou 2, et

*A)2.* un cocatalyseur activant choisi parmi :

(i) les boranes substitués par un groupe hydrocarbyle en $C_1$ à $C_{30}$ et leurs dérivés halogénés, et
(ii) les borates de formule générale :

$$[L^*\text{-}H]^+[BQ_4]^-$$

dans laquelle L* représente une base de Lewis neutre, $[L^*-H]^+$ représente un acide de Bronsted, B désigne le bore à l'état de valence 3 et Q représente un groupe hydrocarbyle, hydrocarbyloxy, hydrocarbyle fluoré ou silylhydrocarbyle fluoré, ayant jusqu'à 20 atomes qui ne sont pas des atomes d'hydrogène, étant entendu que Q est un groupe hydrocarbyle dans pas plus d'un cas.

**16.** Procédé selon la revendication 15, dans lequel M représente le titane.

**17.** Procédé selon la revendication 16, dans lequel X représente un groupe hydrocarbyle en $C_1$ à $C_{20}$.

**18.** Procédé selon la revendication 15, dans lequel le polymère d'éthylène contient au moins 80 % en moles d'éthylène et au plus 20 % en moles d'un ou plusieurs comonomères alpha-oléfine ou dioléfine.

**19.** Procédé selon la revendication 14, dans lequel le support est prétraité avec du triéthylaluminium.

**20.** Procédé selon la revendication 15, dans lequel le support est de la silice, de l'alumine ou un mélange des deux.

**21.** Procédé selon la revendication 20, dans lequel le support est prétraité.

**22.** Procédé selon la revendication 21, dans lequel le support est prétraité avec du triéthylaluminium.

**23.** Procédé selon la revendication 1 ou 15, dans lequel le support est déshydraté par chauffage à une température comprise entre 100 et 1000 °C, pendant une durée de 1 à 100 heures.

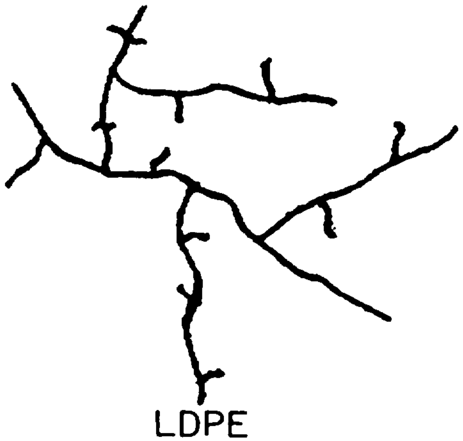

LDPE
FIG. 1A

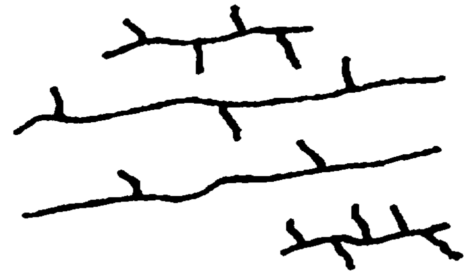

LLDPE
FIG. 1B

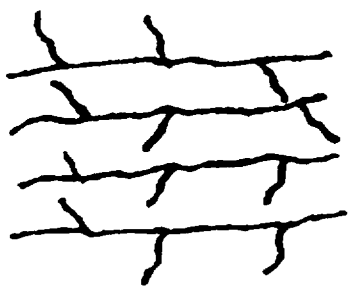

Homogeneous Copolymers
FIG. 1C

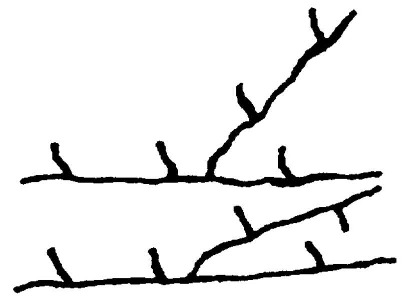

Substantially Linear
Ethylene Polymers
FIG. 1D